# EUROPÄISCHE PATENTSCHRIFT

(11) **EP 3 922 556 B1**
(45) Veröffentlichungstag und Bekanntmachung des Hinweises auf die Patenterteilung: **16.04.2025**
(21) Anmeldenummer: 21175662.2
(22) Anmeldetag: 25.05.2021
(51) Int. Cl.: B64D 11/06

(54) **FLUGZEUGSITZVORRICHTUNG**
AIRCRAFT SEAT DEVICE
DISPOSITIF FORMANT SIÈGE D'AVION

(30) Priorität: 10.06.2020 DE 102020115522
(43) Veröffentlichungstag der Anmeldung: 15.12.2021
(73) Patentinhaber: Recaro Aircraft Seating GmbH & Co. KG, 74523 Schwäbisch Hall (DE)
(72) Erfinder: Stienen, Phillipp, 72070 Tübingen (DE); Billion, Julien, 71522 Backnang (DE); Schmelcher, Robin, 74196 Stein am Kocher (DE); Schuler, Thomas, 74523 Schwäbisch Hall (DE); Gärtner, André, 74523 Schwäbisch Hall (DE)
(74) Vertreter: Daub, Thomas

(56) Entgegenhaltungen:
- DE-A1- 102009 042 879
- DE-A1- 102015 116 594
- US-A- 4 726 621
- US-A1- 2017 217 349

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit einer Rückenlehne und mit einer Tischvorrichtung, die eine schwenkbar an der Rückenlehne angeordnete Tischeinheit aufweist, vorgeschlagen worden.

Die Druckschrift DE 10 2015 116594 A1 offenbart eine Flugzeugsitzvorrichtung mit einer Rückenlehne, mit einer Tischvorrichtung, die eine schwenkbar an der Rückenlehne angeordnete Tischeinheit aufweist, wobei die Tischeinheit in einer Verstaustellung an einen Anklappbereich der Rückenlehne anklappbar ist, und mit einer Verstauvorrichtung vorgeschlagen, die zur Aufnahme von kleinen Utensilien vorgesehen ist und ein Aufbewahrungselement umfasst, das einen Aufnahmebereich ausbildet, wobei der Aufnahmebereich der Verstauvorrichtung in einem Bereich unmittelbar unterhalb des Anklappbereichs der Rückenlehne für die Tischeinheit in ihrer Verstaustellung und/oder in einem unteren Bereich der Tischeinheit angeordnet ist, wobei ein oberer Bereich des Anklappbereichs frei von der Verstauvorrichtung ist, wobei der Aufnahmebereich eine Befüllöffnung aufweist, die in einem Betriebszustand, in dem die Tischeinheit in der Verstaustellung angeordnet ist, zumindest in einem Seitenbereich teilweise frei ist, wodurch die Verstauvorrichtung mit kleinen Utensilien befüllt werden kann.

Die Druckschrift DE 10 2009 042879 A1 offenbart eine Sitzvorrichtung mit einer Rückenlehne und mit einer Tischvorrichtung, die eine schwenkbar an der Rückenlehne angeordnete Tischeinheit aufweist, mit einem Getränkehalter, der an die Tischvorrichtung anbringbar ist, wobei der Getränkehalter einen Aufnahmebereich ausbildet, der sich bis auf unterhalb der Unterkante der Tischeinheit erstreckt.

Die Aufgabe der Erfindung besteht insbesondere darin, eine gattungsgemäße Vorrichtung mit verbesserten Eigenschaften hinsichtlich einer Verstaumöglichkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einer Rückenlehne, mit einer Tischvorrichtung, die eine schwenkbar an der Rückenlehne angeordnete Tischeinheit aufweist, wobei die Tischeinheit in einer Verstaustellung an einen Anklappbereich der Rückenlehne anklappbar ist, und mit einer Verstauvorrichtung vorgeschlagen, die zur Aufnahme von kleinen Utensilien vorgesehen ist und ein Aufbewahrungselement umfasst, das einen Aufnahmebereich ausbildet, wobei der Aufnahmebereich der Verstauvorrichtung in einem Bereich unmittelbar unterhalb des Anklappbereichs der Rückenlehne für die Tischeinheit in ihrer Verstaustellung und in einem unteren Bereich der Tischeinheit angeordnet ist, wobei ein oberer Bereich des Anklappbereichs frei von der Verstauvorrichtung ist, wobei der Aufnahmebereich eine Befüllöffnung aufweist, die in einem Betriebszustand, in dem die Tischeinheit in der Verstaustellung angeordnet ist, frei ist, wodurch die Verstauvorrichtung befüllt werden kann.

Erfindungsgemäß weist die Tischeinheit an ihrer Anbindungsseite, an der die Tischeinheit gelagert ist, eine Aussparung auf, in die sich die Verstauvorrichtung erstreckt.

Durch diese Ausgestaltung kann ein zur Verfügung stehender Bauraum vorteilhaft ausgenutzt werden. Zudem kann durch diese Ausgestaltung eine Erreichbarkeit des Aufnahmebereichs vorteilhaft in der Verstaustellung und in der wenigstens einen Gebrauchsstellung ermöglicht werden. Des Weiteren kann durch diese Ausgestaltung ein Verklemmen der kleinen Utensilien während einer Verschwenkung der Tischeinheit vorteilhaft vermieden werden. Vorzugsweise ist die Tischvorderseite des Tischgrundkörpers als die Anbindungsseite der Tischeinheit ausgebildet. Durch eine erfindungsgemäße Ausgestaltung kann eine vorteilhaft einfache Verstaumöglichkeit bereitgestellt werden. Durch die erfindungsgemäße Ausgestaltung kann insbesondere eine vorteilhaft einfach ausgebildete Verstauvorrichtung bereitgestellt werden. Dadurch können ein Montageaufwand sowie Herstellungskosten vorteilhaft gering gehalten werden. Des Weiteren kann durch die erfindungsgemäße Ausgestaltung ein vorteilhaft geringer Platzbedarf des Aufbewahrungselements und dadurch eine kompakte Bauweise erreicht werden. Ferner kann dadurch unerschlossener Bauraum vorteilhaft genutzt werden. Zudem bewirkt eine Anordnung des Aufbewahrungselements vorteilhaft keine oder lediglich eine vorteilhaft geringe Platzeinschränkung für einen Passagier. Durch die erfindungsgemäße Ausgestaltung kann ferner eine vorteilhaft einfache und ergonomische Erreichbarkeit des Aufnahmebereichs ermöglicht werden. Ferner kann durch die erfindungsgemäße Ausgestaltung vorteilhaft eine Erreichbarkeit des Aufnahmebereichs in der Verstaustellung der Tischeinheit und in wenigstens einer Gebrauchsstellung der Tischeinheit ermöglicht werden. Des Weiteren kann durch die erfindungsgemäße Ausgestaltung ein Verklemmen der kleinen Utensilien bei einer Verschwenkung der Tischeinheit vorteilhaft vermieden werden. Des Weiteren kann durch die erfindungsgemäße Ausgestaltung erreicht werden, dass eine Beeinflussung eines Testwerts durch die Verstauvorrichtung für einen Head-Injury-Criterion-Test unkritisch ist. Vorzugsweise ist die Flugzeugsitzvorrichtung Teil eines Flugzeugsitzes. Vorzugsweise ist der Flugzeugsitz dazu vorgesehen, auf einer Aufständerebene in einer Flugzeugkabine aufgeständert zu werden. Bevorzugt ist die Aufständerebene von einem Flugzeugkabinenboden der Flugzeugkabine ausgebildet. Bevorzugt umfasst der Flugzeugsitz die Flugzeugsitzvorrichtung. Vorzugsweise weist die Rückenlehne eine Rückseite auf. Bevorzugt ist die Rückseite der Rückenlehne von einer Vorderseite der Rückenlehne abgewandt. Vorzugsweise bildet die Rückenlehne auf der Vorderseite der Rückenlehne eine Rückenabstützfläche für einen Passagier aus. Unter "an der Rückenlehne angeordnet" soll vorzugsweise verstanden werden, dass die Tischvorrichtung direkt mit der Rückenlehne und/oder indirekt mit der Rückenlehne über zumindest ein mit der Rückenlehne verbundenes Bauteil der Flugzeugsitzvorrichtung und/oder des Flugzeugsitzes verbunden ist, wobei die Tischeinheit der Tischvorrichtung vorzugsweise in zumindest einem Betriebszustand direkt mit der Rückenlehne verbunden ist. Vorzugsweise weist die Tischeinheit die Verstaustellung und die wenigstens eine Gebrauchsstellung auf. Vorzugsweise weist die Tischeinheit einen Tischgrundkörper auf oder bildet die Tischeinheit den Tischgrundkörper aus. Bevorzugt weist der Tischgrundkörper eine Tischoberseite auf, die zu einer Benutzung durch einen Passagier, insbesondere zum Abstellen von Gegenständen, vorgesehen ist. Vorzugsweise bildet die Tischeinheit an der Tischoberseite eine Abstell- und/oder Ablagefläche aus. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Verstaustellung" soll vorzugsweise eine Stellung verstanden werden, in der die Tischeinheit an der Rückenlehne zu einem Nichtgebrauch verstaut ist, wobei eine Ablage von Gegenständen auf der Tischoberseite unmöglich ist. Vorzugsweise ist die Tischvorrichtung in der Verstaustellung mit der Rückenlehne verriegelt. Bevorzugt ist die Tischeinheit in der Verstaustellung in dem Anklappbereich der Rückenlehne angeordnet. Unter einem "Anklappbereich" soll vorzugsweise ein Bereich an der Rückseite der Rückenlehne verstanden werden, der von der Tischeinheit in der Verstaustellung der Tischeinheit verdeckt ist. Unter einem "oberen Bereich des Anklappbereichs" soll vorzugsweise ein horizontal verlaufender Abschnitt des Anklappbereichs verstanden werden, der innerhalb des Anklappbereichs maximal von der Aufständerebene beabstandet ist. Vorzugsweise erstreckt sich der obere Bereich des Anklappbereichs über höchstens 50 %, bevorzugt höchstens 33 %, eines maximalen Abstands zwischen der Tischvorderseite und der Tischhinterseite, insbesondere in der Verstaustellung der Tischeinheit. Bevorzugt grenzt der obere Bereich des Anklappbereichs in der Verstaustellung der Tischeinheit an die Tischhinterseite an. Bevorzugt erstreckt sich der obere Bereich des Anklappbereichs ausgehend von einer Oberkante des Anklappbereichs bevorzugt um höchstens 10 cm und besonders bevorzugt um höchstens 5 cm in Richtung der Aufständerebene. Vorzugsweise ist eine obere Hälfte der Tischeinheit in der Verstaustellung der Tischeinheit frei von der Verstauvorrichtung, insbesondere wenn die Tischeinheit zumindest zwei klappbar zueinander ausgebildete Tischgrundkörper aufweist. Vorzugsweise ist ein Verriegelungsmechanismus der Tischvorrichtung in dem oberen Bereich des Anklappbereichs angeordnet. Unter "anklappbar" soll vorzugsweise verstanden werden, dass die Tischeinheit so in ihre Verstaustellung überführbar ist, dass sie in der Verstaustellung in dem Anklappbereich angeordnet ist. Vorzugsweise ist die Tischeinheit über zumindest eine Achse schwenkbar gelagert. Bevorzugt liegt die Tischeinheit in ihrer Verstaustellung zumindest teilweise an der Rückenlehne an. Vorzugsweise ist die Tischoberseite in der Verstaustellung der Tischeinheit der Rückenlehne zugewandt. Vorzugsweise liegt die Tischoberseite in der Verstaustellung der Tischeinheit zumindest teilweise direkt an der Rückenlehne an. Unter einer "Gebrauchsstellung" soll vorzugsweise eine Stellung verstanden werden, in der die Tischeinheit aus dem Anklappbereich verschwenkt ist, wobei eine Ablage von Gegenständen auf der Tischoberseite möglich ist. Vorzugsweise ist die Tischoberseite in der wenigstens einen Gebrauchsstellung von der Aufständerebene abgewandt. Bevorzugt ist die Abstell- und/oder Ablagefläche in der wenigstens einen Gebrauchsstellung zumindest im Wesentlichen parallel zu der Aufständerebene ausgerichtet. Unter "zumindest im Wesentlichen parallel" soll vorzugsweise verstanden werden, dass ein Winkel zwischen der Tischoberseite in der wenigstens einen Gebrauchsstellung und der Aufständerebene bevorzugt höchstens 5 Grad, besonders bevorzugt 3 Grad und/oder bevorzugt mindestens 1 Grad beträgt. Vorzugsweise ist die Tischeinheit in der Gebrauchsstellung gegenüber der Verstaustellung um mindestens 45 Grad verschwenkt. Unter einem "unteren Bereich der Tischeinheit" soll vorzugsweise ein Bereich verstanden werden, der sich in der Verstaustellung der Tischeinheit ausgehend von einer Tischaußenkontur des Tischgrundkörpers an einer Tischvorderseite des Tischgrundkörpers um höchstens 5 cm von der Aufständerebene weg in Richtung einer Tischhinterseite des Tischgrundkörpers erstreckt. Bevorzugt ist die Tischvorderseite in der wenigstens einen Gebrauchsstellung der Tischeinheit näher an der Rückenlehne angeordnet als die Tischhinterseite des Tischgrundkörpers. Vorzugsweise ist das Aufbewahrungselement zur Lagerung der kleinen Utensilien vorgesehen. Bevorzugt ist das Aufbewahrungselement als ein Spritzgussbauteil aus Kunststoff ausgebildet. Vorzugsweise umfasst das Spritzgussbauteil zumindest eine Hartkomponente und/oder zumindest eine Weichkomponente. Grundsätzlich wäre es auch denkbar, dass das Aufbewahrungselement verstärkt ausgebildet ist, beispielsweise mittels eines Blechs und/oder mittels eines Faserverbunds. Alternativ wäre es auch denkbar, dass das Aufbewahrungselement aus einem anderen, dem Fachmann für geeignet erscheinenden Werkstoff ausgebildet ist. Beispielsweise könnte das Aufbewahrungselement aus einem Metall gebildet sein. Alternativ oder zusätzlich könnte das Aufbewahrungselement zumindest teilweise aus einem Textil gebildet sein. Alternativ oder zusätzlich wäre es denkbar, dass das Aufbewahrungselement aus einem bespannten Rahmen ausgebildet ist. Unter "kleinen Utensilien" sollen vorzugsweise Gegenstände zum persönlichen Gebrauch verstanden werden, die bevorzugt an einem Körper des Passagiers oder in einem Handgepäck mitführbar sind. Unter "klein" soll vorzugsweise ein Maß verstanden werden, welches eine maximale Erstreckung eines Utensils von höchstens 30 cm und/oder ein maximales Volumen eines kleinsten gedachten Quaders, welcher das Utensil gerade noch vollständig umschließt, von höchstens 1000 cm³ beschreibt. Vorzugsweise ist ein kleines Utensil als eine Brille, als ein Portemonnaie, als ein Reisepass, als ein Buch, als ein Stift, als ein Smartphone, als ein Kopfhörer, als ein Elektroanschlusskabel und/oder Elektroadapter, als ein Kaugummi oder als ein Hygiene- und/oder Körperpflegeprodukt ausgebildet. Grundsätzlich kann das kleine Utensil aber auch als ein Amenity Kit ausgebildet sein. Unter einem "Amenity Kit" soll vorzugsweise ein Produkt verstanden werden, welches dem Passagier von einer Fluggesellschaft für eine Reise zur Verfügung gestellt wird, wobei das Produkt beispielsweise Hygieneartikel, eine Schlafmaske, Socken und/oder Kopfhörer umfasst.

Des Weiteren wird vorgeschlagen, dass der Aufnahmebereich eine Befüllöffnung aufweist, die in einem Betriebszustand, in dem die Tischeinheit in der Verstaustellung angeordnet ist, frei ist, wodurch die Verstauvorrichtung befüllt werden kann. Durch diese Ausgestaltung kann ein vorteilhaft einfach erreichbarer Aufnahmebereich bereitgestellt werden. Dadurch kann eine vorteilhaft intuitive Handhabung der Verstauvorrichtung erfolgen. Dadurch kann eine vorteilhaft hohe Passagierzufriedenheit erreicht werden. Des Weiteren ist der Aufnahmebereich in der Verstaustellung der Tischeinheit vorteilhaft erreichbar und einsehbar. Dadurch kann ein Vergessen von persönlichen Gegenständen vorteilhaft vermieden werden. Vorzugsweise kann die Verstauvorrichtung mittels der Befüllöffnung befüllt werden. Vorzugsweise ist die Befüllöffnung zu einer Platzierung der kleinen Utensilien in dem Aufbewahrungselement vorgesehen. Vorzugsweise umfasst das Aufbewahrungselement einen Verstauraum. Besonders bevorzugt ist der Verstauraum innerhalb des Aufbewahrungselements angeordnet. Vorzugsweise umgibt das Aufbewahrungselement den Verstauraum zumindest teilweise. Vorzugsweise ist der Verstauraum von dem Aufbewahrungselement und von zumindest einer gedachten Fläche begrenzt, die sich zwischen freien Enden des Aufbewahrungselements erstreckt. Bevorzugt bilden die freien Enden des Aufbewahrungselements eine in sich geschlossene Außenkontur des Aufbewahrungselements aus. Besonders bevorzugt ist die Befüllöffnung als ein Teilbereich der gedachten Fläche ausgebildet. Bevorzugt ist die Befüllöffnung als eine Öffnung des Verstauraums ausgebildet. Bevorzugt ist die Befüllöffnung permanent geöffnet. Besonders bevorzugt ist die Befüllöffnung in jedem Betriebszustand von einem Passagier, insbesondere ohne weitere Handlungen, erreichbar. Vorzugsweise ist die Befüllöffnung in einem weiteren Betriebszustand, in dem die Tischeinheit in einer Gebrauchsstellung angeordnet ist, frei. Unter "frei" soll vorzugsweise verstanden werden, dass die kleinen Utensilien hindernisfrei durch die Befüllöffnung in das Aufbewahrungselement ablegbar sind, wobei die Tischvorrichtung die Befüllöffnung vorzugsweise nicht verdeckt.

Ferner wird vorgeschlagen, dass die Verstauvorrichtung an der Tischvorrichtung angebunden ist. Durch diese Ausgestaltung kann die Verstauvorrichtung vorteilhaft einfach und ergonomisch benutzt werden. Des Weiteren kann dadurch erreicht werden, dass die Verstauvorrichtung in der Verstaustellung und in der wenigstens einen Gebrauchsstellung der Tischeinheit nutzbar ist. Besonders bevorzugt ist die Verstauvorrichtung fest, insbesondere drehfest, an der Tischvorrichtung angebunden. Alternativ wäre es auch denkbar, dass die Verstauvorrichtung zumindest teilweise gegenüber der Tischvorrichtung beweglich angeordnet ist. Vorzugsweise ist die Verstauvorrichtung schwenkbar gegenüber der Aufständereinheit und/oder gegenüber der Rückenlehne gelagert.

Zudem wird vorgeschlagen, dass das Aufbewahrungselement fest mit der Tischvorrichtung gekoppelt ist. Durch diese Ausgestaltung kann eine vorteilhaft einfache und ergonomische Erreichbarkeit des Aufbewahrungselements ermöglicht werden. Bevorzugt ist das Aufbewahrungselement direkt an der Tischvorrichtung angebunden. Vorzugsweise ist das Aufbewahrungselement drehfest mit der Tischvorrichtung gekoppelt. Besonders bevorzugt ist das Aufbewahrungselement formschlüssig, kraftschlüssig und/oder stoffschlüssig mit der Tischvorrichtung verbunden.

Des Weiteren wird vorgeschlagen, dass der Aufnahmebereich zwischen Drehlageranbindungen der Tischeinheit angeordnet ist. Durch diese Ausgestaltung kann der Aufnahmebereich vorteilhaft nahe an einem Passagier angeordnet werden. Des Weiteren ist der Aufnahmebereich durch diese Ausgestaltung vorteilhaft einfach für einen Passagier erreichbar. Vorzugsweise weist die Tischeinheit zwei Drehlageranbindungen auf. Bevorzugt sind die Drehlageranbindungen jeweils dazu vorgesehen, die Tischeinheit schwenkbar zu lagern. Vorzugsweise ist die Tischeinheit dazu vorgesehen, über die Drehlageranbindungen zwischen der Verstaustellung und der wenigstens einen Gebrauchsstellung verschwenkt zu werden. Besonders bevorzugt weist die Tischvorrichtung zwei Lagerarme auf, die zu einer Lagerung der Tischeinheit gegenüber der Aufständereinheit vorgesehen sind. Vorzugsweise sind die Drehlageranbindungen der Tischeinheit dazu vorgesehen, den Tischgrundkörper und die Lagerarme miteinander zu koppeln. Bevorzugt sind die Drehlageranbindungen der Tischeinheit dazu vorgesehen, die Tischeinheit schwenkbar gegenüber den Lagerarmen zu lagern. Vorzugsweise weist die Tischeinheit einen Auszugmechanismus auf. Bevorzugt ist der Auszugmechanismus dazu vorgesehen, den Tischgrundkörper zwischen wenigstens zwei Gebrauchsstellungen translatorisch zu verschieben. Dadurch kann ein Abstand des Tischgrundkörpers zu einem Passagier vorteilhaft variiert werden. Besonders bevorzugt weist der Auszugmechanismus zwei Trägerelemente auf. Vorzugsweise sind die Trägerelemente als Gleitelemente ausgebildet, auf denen der Tischgrundkörper gleitend gelagert ist. Bevorzugt sind die Trägerelemente jeweils mit einer der Drehlageranbindungen verbunden.

Ferner wird vorgeschlagen, dass die Tischvorrichtung eine Lagertraverse aufweist, an die das Aufbewahrungselement angebunden ist. Durch diese Ausgestaltung kann das Aufbewahrungselement vorteilhaft nahe an einem Passagier angeordnet werden. Des Weiteren ist das Aufbewahrungselement durch diese Ausgestaltung vorteilhaft einfach für einen Passagier erreichbar. Vorzugsweise sind die Lagerarme über die Lagertraverse miteinander gekoppelt. Die Lagertraverse ist vorzugsweise dazu vorgesehen, eine gemeinsame Verschwenkung der Lagerarme zu bewirken. Vorzugsweise ist die Lagertraverse parallel zu der Aufständerebene angeordnet. Die Lagertraverse ist vorzugsweise als ein Hohlprofil ausgebildet. Vorzugsweise ist die Lagertraverse in der wenigstens einen Gebrauchsstellung zwischen der Rückenlehne und der Hinterseite der Tischeinheit angeordnet. Bevorzugt ist die Lagertraverse senkrecht zu den Trägerelementen des Auszugmechanismus ausgerichtet. Vorzugsweise ist das Aufbewahrungselement formschlüssig, kraftschlüssig und/oder stoffschlüssig mit der Lagertraverse verbunden.

Zudem wird vorgeschlagen, dass das Aufbewahrungselement die Lagertraverse zumindest in einem Teilbereich ausbildet. Durch diese Ausgestaltung kann eine vorteilhaft kompakte Bauweise erreicht werden. Des Weiteren kann durch diese Ausgestaltung eine vorteilhaft integrale Bauweise erreicht werden, wodurch eine vorteilhaft einfache Montage und Reinigung des Aufbewahrungselements ermöglicht wird. Bevorzugt bildet das Aufbewahrungselement die Lagertraverse zu mindestens 30 % einer maximalen Erstreckung der Lagertraverse aus. Vorzugsweise ist das Aufbewahrungselement einstückig mit der Lagertraverse ausgebildet. Unter "einstückig" soll vorzugsweise zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Des Weiteren wird vorgeschlagen, dass die Tischvorrichtung die Lagerarme aufweist, an die das Aufbewahrungselement angebunden ist. Durch diese Ausgestaltung kann eine vorteilhaft kompakte Bauweise erreicht werden. Des Weiteren kann durch diese Ausgestaltung eine vorteilhaft integrale Bauweise erreicht werden, wodurch eine vorteilhaft einfache Montage und Reinigung des Aufbewahrungselements ermöglicht wird. Besonders bevorzugt weist die Tischvorrichtung zwei Lagerarme auf, an die das Aufbewahrungselement angebunden ist. Vorzugsweise sind die Lagerarme über eine gemeinsame Schwenkachse schwenkbar zu einer Aufständereinheit des Flugzeugsitzes gelagert. Bevorzugt sind die Lagerarme dazu vorgesehen, die Tischeinheit zumindest in einer Gebrauchsstellung gegenüber dem Flugzeugsitz abzustützen.

Bevorzugt ist die Tischvorderseite näher an den Drehlageranbindungen angeordnet als die Tischhinterseite. Vorzugsweise ist die Tischeinheit an ihrer Anbindungsseite schwenkbar über die Drehlageranbindungen gelagert. Bevorzugt weist der Tischgrundkörper zwischen der Tischvorderseite und der Tischhinterseite in einem Bereich der Aussparung eine geringere maximale Erstreckung auf als in einem Bereich abseits der Aussparung. Besonders bevorzugt weist der Tischgrundkörper zwischen der Tischvorderseite und der Tischhinterseite in dem Bereich der Aussparung eine maximale Erstreckung auf, die bevorzugt mindestens 5 % und vorzugsweise mindestens 10 % kleiner ist als eine maximale Erstreckung in einem Bereich abseits der Aussparung. Vorzugsweise erstreckt sich die Aussparung vollständig zwischen der Tischoberseite des Tischgrundkörpers und einer Tischunterseite des Tischgrundkörpers. Bevorzugt ist die Tischunterseite von der Tischoberseite abgewandt angeordnet. Vorzugsweise ist die Tischaußenkontur des Tischgrundkörpers an der Tischvorderseite des Tischgrundkörpers in dem Bereich der Aussparung näher an der Tischhinterseite des Tischgrundkörpers angeordnet als in einem Bereich abseits der Aussparung.

Zudem wird vorgeschlagen, dass die Aussparung eine Längserstreckung von mindestens 150 mm, insbesondere mindestens 200 mm, aufweist. Durch diese Ausgestaltung kann ein vorteilhaft breites Aufbewahrungselement bereitgestellt werden. Dadurch kann vorteilhaft eine Aufbewahrung von unterschiedlich formatierten Utensilien ermöglicht werden. Des Weiteren kann dadurch ein Gewicht der Tischeinheit vorteilhaft reduziert werden. Vorzugsweise ist die Längserstreckung parallel zu der Lagertraverse gemessen. Vorzugsweise weist die Aussparung eine maximale Quererstreckung, die senkrecht zu der Lagertraverse gemessen ist, von mindestens 20 mm auf.

Des Weiteren wird vorgeschlagen, dass die Verstauvorrichtung an der Rückenlehne angeordnet ist, wobei das Aufbewahrungselement an der Rückseite der Rückenlehne angebracht ist. Durch diese Ausgestaltung kann eine vorteilhaft einfache Anbindung des Aufbewahrungselements erfolgen. Vorzugsweise ist das Aufbewahrungselement einstückig an der Rückseite der Rückenlehne angeformt oder angebunden.

Ferner wird vorgeschlagen, dass das Aufbewahrungselement einstückig mit der Rückenlehne ausgebildet ist. Durch diese Ausgestaltung kann eine vorteilhaft einfache und kompakte Anbindung des Aufbewahrungselements erfolgen. Besonders bevorzugt ist das Aufbewahrungselement formschlüssig, kraftschlüssig und/oder stoffschlüssig mit der Rückenlehne verbunden.

Zudem wird vorgeschlagen, dass sich der Aufnahmebereich bis in den Anklappbereich hinter der angeklappten Tischeinheit erstreckt. Durch diese Ausgestaltung kann ein zur Verfügung stehender Bauraum vorteilhaft ausgenutzt werden. Des Weiteren kann durch diese Ausgestaltung eine vorteilhaft kompakte Bauweise ermöglicht werden. Unter "hinter der angeklappten Tischeinheit" soll vorzugsweise zwischen der Rückenlehne und der Tischeinheit in der Verstaustellung der Tischeinheit verstanden werden. Vorzugsweise ist die Rückenlehne in dem Anklappbereich in der Verstaustellung der Tischeinheit zumindest teilweise von der Tischeinheit beabstandet, wobei ein Abstand zwischen der Rückenlehne und der Tischeinheit teilweise den Aufnahmebereich ausbildet. Bevorzugt beträgt ein maximaler Abstand zwischen der Rückenlehne und der Tischeinheit in der Verstaustellung der Tischeinheit in dem Aufnahmebereich mindestens 20 mm.

Des Weiteren wird ein Flugzeugsitz mit der erfindungsgemäßen Flugzeugsitzvorrichtung vorgeschlagen. Durch diese Ausgestaltung kann ein Flugzeugsitz mit einer besonders vorteilhaften Verstaumöglichkeit bereitgestellt werden.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfasser, sofern diese in den Umfang der beigefügten Ansprüche fallen.

Es zeigen:
- Fig. 1: eine erfindungsgemäße Flugzeugsitzvorrichtung mit einer Tischeinheit in einer Verstaustellung in einer schematischen Darstellung in einem ersten Ausführungsbeispiel,
- Fig. 2: die erfindungsgemäße Flugzeugsitzvorrichtung mit der Tischeinheit in einer Gebrauchsstellung in einer schematischen Darstellung in dem ersten Ausführungsbeispiel,
- Fig. 3: die erfindungsgemäße Flugzeugsitzvorrichtung mit der Tischeinheit in der Gebrauchsstellung in einer schematischen Seitenansicht in dem ersten Ausführungsbeispiel,
- Fig. 4: eine schematische Schnittdarstellung der erfindungsgemäßen Flugzeugsitzvorrichtung mit der Tischeinheit in der Gebrauchsstellung aus Fig. 3,
- Fig. 5: eine erfindungsgemäße Flugzeugsitzvorrichtung mit einer Tischeinheit in einer Gebrauchsstellung in einer schematischen Darstellung in einem zweiten Ausführungsbeispiel,
- Fig. 6: die erfindungsgemäße Flugzeugsitzvorrichtung mit der Tischeinheit in der Gebrauchsstellung in einer schematischen Darstellung in dem zweiten Ausführungsbeispiel,
- Fig. 7: eine erfindungsgemäße Flugzeugsitzvorrichtung mit einer Tischeinheit in einer Verstaustellung in einer schematischen Darstellung in einem dritten Ausführungsbeispiel,
- Fig. 8: die erfindungsgemäße Flugzeugsitzvorrichtung mit der Tischeinheit in einer Gebrauchsstellung in einer schematischen Darstellung in dem dritten Ausführungsbeispiel,
- Fig. 9: die erfindungsgemäße Flugzeugsitzvorrichtung mit der Tischeinheit in einer weiteren Gebrauchsstellung in einer schematischen Darstellung in dem dritten Ausführungsbeispiel,
- Fig. 10: die erfindungsgemäße Flugzeugsitzvorrichtung mit der Tischeinheit in der weiteren Gebrauchsstellung in einer schematischen Seitenansicht in dem dritten Ausführungsbeispiel,
- Fig. 11: eine erfindungsgemäße Flugzeugsitzvorrichtung mit einer Tischeinheit in einer Verstaustellung in einer schematischen Darstellung in einem vierten Ausführungsbeispiel und
- Fig. 12: die erfindungsgemäße Flugzeugsitzvorrichtung mit der Tischeinheit in einer Gebrauchsstellung in einer schematischen Darstellung in dem vierten Ausführungsbeispiel.

### Beschreibung der Ausführungsbeispiele

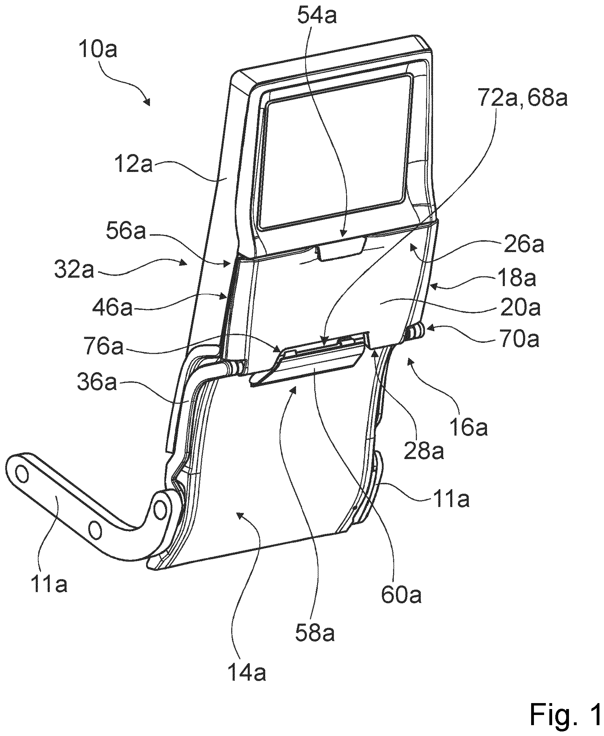

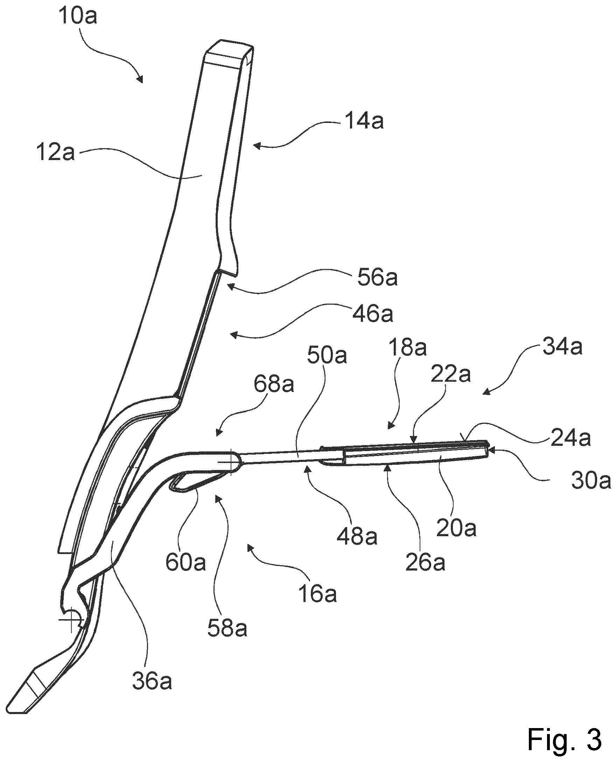

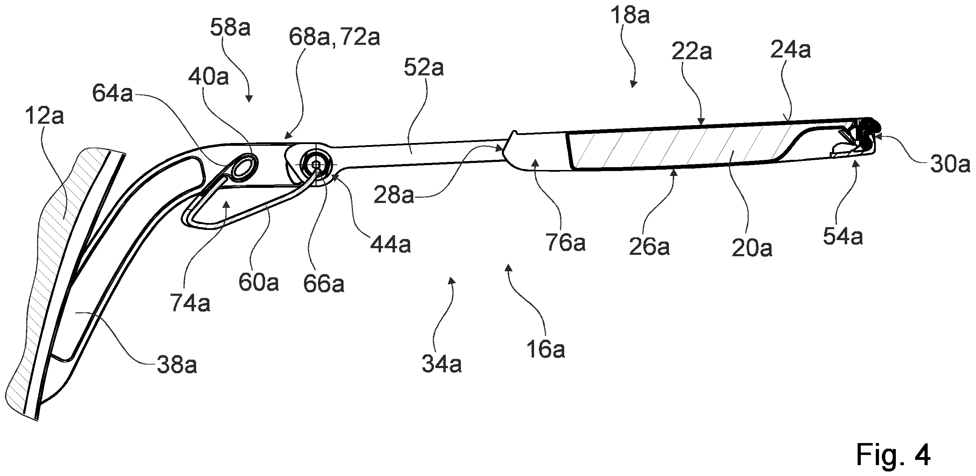

In den Figuren 1 bis 4 ist eine Flugzeugsitzvorrichtung 10a in einem ersten Ausführungsbeispiel gezeigt. Die Flugzeugsitzvorrichtung 10a ist Teil eines teilweise dargestellten Flugzeugsitzes. Der Flugzeugsitz ist dazu vorgesehen, auf einer Aufständerebene in einer nicht näher dargestellten Flugzeugkabine aufgeständert zu werden. Die Aufständerebene ist von einem Flugzeugkabinenboden der Flugzeugkabine ausgebildet. Der Flugzeugsitz umfasst die Flugzeugsitzvorrichtung 10a. Grundsätzlich kann der Flugzeugsitz Teil einer nicht näher dargestellten Sitzbank sein, die mehrere Flugzeugsitze umfasst. Im vorliegenden Fall ist der Flugzeugsitz als ein Economy-Class-Flugzeugsitz oder als ein Premium-Economy-Class-Flugzeugsitz ausgebildet.

Der Flugzeugsitz umfasst eine nicht näher dargestellte Aufständereinheit. Die Flugzeugsitzvorrichtung 10a ist mit der Aufständereinheit gekoppelt. Der Flugzeugsitz umfasst eine nicht näher dargestellte Sitzbodeneinheit. Der Flugzeugsitz umfasst im vorliegenden Fall zwei nicht näher dargestellte Sitzteiler 11a. Die Sitzteiler 11a sind seitlich neben der Sitzbodeneinheit angeordnet. Die zwei Sitzteiler 11a sind fest mit der Aufständereinheit verbunden. Die Flugzeugsitzvorrichtung 10a ist mit den zwei Sitzteilern 11a gekoppelt. Die Flugzeugsitzvorrichtung 10a umfasst eine Rückenlehne 12a. Die Rückenlehne 12a ist mit der Aufständereinheit gekoppelt. Die Rückenlehne 12a ist beweglich an den zwei Sitzteilern 11a gelagert. Die Rückenlehne 12a ist schwenkbar zu der Aufständereinheit gelagert. Grundsätzlich kann die Rückenlehne 12a auch starr zu der Aufständereinheit ausgebildet sein. Die Rückenlehne 12a bildet auf einer Vorderseite der Rückenlehne 12a eine Rückenabstützfläche für einen Passagier aus. Die Rückenlehne 12a weist eine Rückseite 14a auf. Die Rückseite 14a der Rückenlehne 12a ist von der Vorderseite der Rückenlehne 12a abgewandt.

Die Flugzeugsitzvorrichtung 10a umfasst eine Tischvorrichtung 16a. Die Tischvorrichtung 16a weist eine schwenkbar an der Rückenlehne 12a angeordnete Tischeinheit 18a auf. Die Tischeinheit 18a ist zur Nutzung durch einen Passagier vorgesehen, der auf einem nicht dargestellten weiteren Flugzeugsitz sitzt, wobei der weitere Flugzeugsitz hinter dem Flugzeugsitz angeordnet und der Rückseite 14a der Rückenlehne 12a der Flugzeugsitzvorrichtung 10a zugewandt ist. Die Tischeinheit 18a ist über zumindest eine Achse schwenkbar gelagert. Die Tischeinheit 18a weist einen Tischgrundkörper 20a auf. Der Tischgrundkörper 20a weist eine Tischoberseite 22a auf. Die Tischoberseite 22a ist zu einer Benutzung durch einen Passagier, insbesondere zum Abstellen von Gegenständen, wie beispielsweise einem Tablett für eine Mahlzeit, vorgesehen. Die Tischeinheit 18a bildet an der Tischoberseite 22a eine Abstell- und/oder Ablagefläche 24a aus. Der Tischgrundkörper 20a weist eine Tischunterseite 26a auf. Die Tischunterseite 26a ist von der Tischoberseite 22a abgewandt angeordnet. Der Tischgrundkörper 20a weist eine Tischvorderseite 28a auf. Der Tischgrundkörper 20a weist eine Tischhinterseite 30a auf.

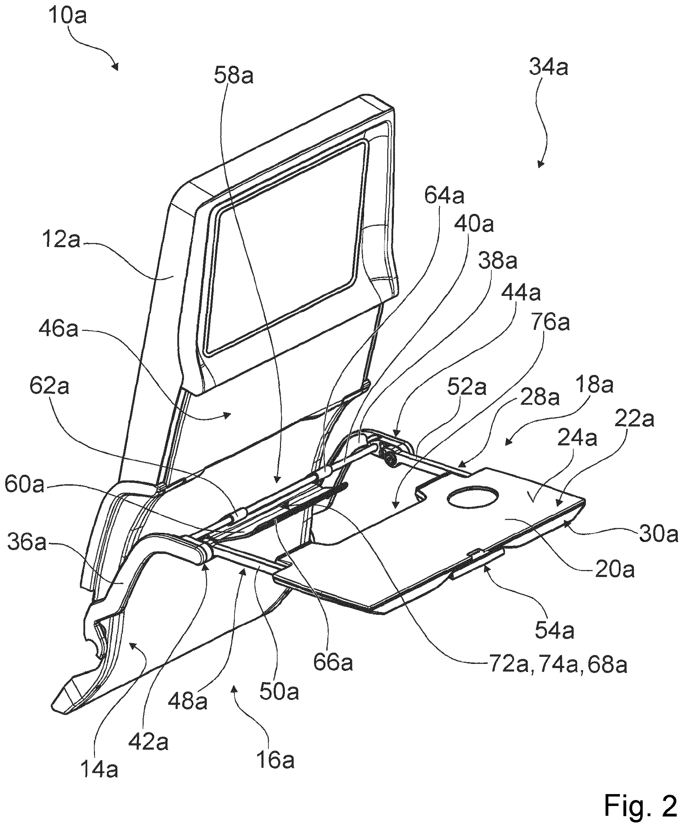

Die Tischeinheit 18a weist eine Verstaustellung 32a (vgl. Fig. 1) und wenigstens eine Gebrauchsstellung 34a (vgl. Fig. 2 bis 4) auf. Die Tischvorrichtung 16a ist in der wenigstens einen Gebrauchsstellung 34a der Tischeinheit 18a über die Sitzteiler 11a mit der Rückenlehne 12a verbunden. Die Tischvorrichtung 16a ist in der wenigstens einen Gebrauchsstellung 34a der Tischeinheit 18a von der Rückenlehne 12a beabstandet. Die Tischvorrichtung 16a ist in der Verstaustellung 32a der Tischeinheit 18a direkt mit der Rückenlehne 12a gekoppelt und über die Sitzteiler 11a mit der Rückenlehne 12a verbunden. Der Tischgrundkörper 20a ist in der wenigstens einen Gebrauchsstellung 34a gegenüber der Verstaustellung 32a um mindestens 45 Grad verschwenkt. Die Tischoberseite 22a ist in der wenigstens einen Gebrauchsstellung 34a von der Aufständerebene abgewandt. Die Abstell- und/oder Ablagefläche 24a ist in der wenigstens einen Gebrauchsstellung 34a zumindest im Wesentlichen parallel zu der Aufständerebene ausgerichtet.

Die Tischvorrichtung 16a weist zwei Lagerarme 36a, 38a auf. Die Lagerarme 36a, 38a sind zu einer Lagerung der Tischeinheit 18a gegenüber der Aufständereinheit vorgesehen. Die Lagerarme 36a, 38a sind über eine gemeinsame Schwenkachse schwenkbar zu der Aufständereinheit gelagert. Die Lagerarme 36a, 38a sind dazu vorgesehen, die Tischeinheit 18a zumindest in der wenigstens einen Gebrauchsstellung 34a gegenüber der Aufständereinheit abzustützen. Alternativ wäre es auch denkbar, dass die Tischeinheit 18a direkt an die Rückenlehne 12a angebunden ist, insbesondere wenn die Rückenlehne 12a starr ausgebildet ist. Die Tischvorderseite 28a des Tischgrundkörpers 20a ist als die Anbindungsseite der Tischeinheit 18a ausgebildet. Die Tischeinheit 18a ist an der Anbindungsseite an die Lagerarme 36a, 38a angebunden.

Die Tischvorrichtung 16a weist eine Lagertraverse 40a auf. Die Lagerarme 36a, 38a sind über die Lagertraverse 40a miteinander gekoppelt. Die Lagertraverse 40a ist dazu vorgesehen, eine gemeinsame Verschwenkung der Lagerarme 36a, 38a zu bewirken. Die Lagertraverse 40a ist parallel zu der Aufständerebene angeordnet. Die Lagertraverse 40a ist stabförmig ausgebildet. Die Lagertraverse 40a weist im vorliegenden Fall einen ovalen Querschnitt auf. Im vorliegenden Fall ist die Lagertraverse 40a als ein Hohlprofil ausgebildet. Alternativ wäre es auch denkbar, dass die Lagertraverse 40a als ein Vollprofil oder als ein offenes Profil ausgebildet ist. Die Lagertraverse 40a ist in der wenigstens einen Gebrauchsstellung 34a, insbesondere in der der Tischgrundkörper 20a maximal von der Rückenlehne 12a beabstandet ist, zwischen der Rückenlehne 12a und der Tischhinterseite 30a des Tischgrundkörpers 20a angeordnet. In der Verstaustellung 32a der Tischeinheit 18a ist die Lagertraverse 40a zumindest teilweise durch die Tischeinheit 18a verdeckt. Der Tischgrundkörper 20a kann hierzu zumindest eine nicht näher dargestellte Nut an der Tischvorderseite 28a aufweisen, die dazu vorgesehen ist, die Lagertraverse 40a in der Verstaustellung 32a der Tischeinheit 18a aufzunehmen.

Die Tischeinheit 18a weist zwei Drehlageranbindungen 42a, 44a auf. Die Drehlageranbindungen 42a, 44a sind jeweils dazu vorgesehen, die Tischeinheit 18a schwenkbar zu lagern. Die Tischeinheit 18a ist an ihrer Anbindungsseite schwenkbar über die Drehlageranbindungen 42a, 44a gelagert. Die zwei Drehlageranbindungen 42a, 44a weisen eine gemeinsame Schwenkachse auf, um die die Tischeinheit 18a schwenkbar gelagert ist. Die gemeinsame Schwenkachse der Drehlageranbindungen 42a, 44a und die gemeinsame Schwenkachse der Lagerarme 36a, 38a sind parallel zueinander ausgerichtet. Die Tischeinheit 18a ist dazu vorgesehen, über die Drehlageranbindungen 42a, 44a zwischen der Verstaustellung 32a und der wenigstens einen Gebrauchsstellung 34a verschwenkt zu werden. Die Drehlageranbindungen 42a, 44a der Tischeinheit 18a sind dazu vorgesehen, den Tischgrundkörper 20a und die Lagerarme 36a, 38a miteinander zu koppeln. Die Drehlageranbindungen 42a, 44a der Tischeinheit 18a sind dazu vorgesehen, die Tischeinheit 18a schwenkbar gegenüber den Lagerarmen 36a, 38a zu lagern. Die Tischvorderseite 28a ist näher an den Drehlageranbindungen 42a, 44a angeordnet als die Tischhinterseite 30a.

Die Rückenlehne 12a weist einen Anklappbereich 46a auf. Der Anklappbereich 46s ist an der Rückseite 14a der Rückenlehne 12a angeordnet. Die Tischeinheit 18a ist in der Verstaustellung 32a an den Anklappbereich 46a der Rückenlehne 12a anklappbar. Die Tischeinheit 18a ist in der Verstaustellung 32a in dem Anklappbereich 46a der Rückenlehne 12a angeordnet. Die Tischeinheit 18a liegt in ihrer Verstaustellung 32a zumindest teilweise an der Rückenlehne 12a an. Der Anklappbereich 46a ist zur Aufnahme der Tischeinheit 18a in der Verstaustellung 32a vorgesehen. Die Tischeinheit 18a ist so in ihre Verstaustellung 32a überführbar, dass sie in der Verstaustellung 32a in dem Anklappbereich 46a angeordnet ist. Bei einer Überführung der Tischeinheit 18a von der wenigstens einen Gebrauchsstellung 34a in die Verstaustellung 32a wird die Tischvorrichtung 16a um die gemeinsame Schwenkachse der Drehlageranbindungen 42a, 44a und um die gemeinsame Schwenkachse der Lagerarme 36a, 38a in Richtung der Rückenlehne 12a verschwenkt. Die Tischoberseite 22a ist in der Verstaustellung 32a der Tischeinheit 18a der Rückenlehne 12a zugewandt. Die Tischoberseite 22a liegt in der Verstaustellung 32a der Tischeinheit 18a zumindest teilweise direkt an der Rückenlehne 12a an. In der Verstaustellung 32a der Tischeinheit 18a ist der Anklappbereich 46a durch den Tischgrundkörper 20a zumindest im Wesentlichen verdeckt. Grundsätzlich können in dem Anklappbereich 46a zumindest eine Kommunikationsschnittstelle, insbesondere eine NFC-Schnittstelle, und/oder zumindest ein weiteres Funktionselement an der Rückenlehne 12a angeordnet sein.

Die Tischeinheit 18a weist einen Auszugmechanismus 48a auf. Der Auszugmechanismus 48a ist dazu vorgesehen, den Tischgrundkörper 20a zwischen wenigstens zwei Gebrauchsstellungen 34a translatorisch zu verschieben. Der Auszugmechanismus 48a ist dazu vorgesehen, einen Abstand des Tischgrundkörpers 20a zu einem Passagier zu variieren. Der Auszugmechanismus 48a weist zwei Trägerelemente 50a, 52a auf. Die Trägerelemente 50a, 52a sind jeweils mit einer der Drehlageranbindungen 42a, 44a verbunden. Die Trägerelemente 50a, 52a sind jeweils mit dem Tischgrundkörper 20a gekoppelt. Die Trägerelemente 50a, 52a sind jeweils als Gleitelemente ausgebildet, auf denen der Tischgrundkörper 20a gleitend gelagert ist. Die Lagertraverse 40a ist senkrecht zu den Trägerelementen 50a, 52a des Auszugmechanismus 48a ausgerichtet.

Die Tischvorrichtung 16a weist einen Verriegelungsmechanismus 54a auf. Der Verriegelungsmechanismus 54a ist in der Verstaustellung 32a der Tischeinheit 18a zu einer Verriegelung der Tischeinheit 18a an der Rückenlehne 12a vorgesehen. Die Tischvorrichtung 16a ist in der Verstaustellung 32a mit der Rückenlehne 12a verriegelt. Alternativ oder zusätzlich wäre es auch denkbar, dass die Rückenlehne 12a den Verriegelungsmechanismus 54a aufweist. Der Verriegelungsmechanismus 54a ist in einem oberen Bereich 56a des Anklappbereichs 46a in der Verstaustellung 32a der Tischeinheit 18a angeordnet. Der Verriegelungsmechanismus 54a ist an der Tischhinterseite 30a des Tischgrundkörpers 20a angeordnet. Der Verriegelungsmechanismus 54a ist für einen Passagier von der Tischunterseite 26a des Tischgrundkörpers 20a bedienbar. Die Tischeinheit 18a ist in der Verstaustellung 32a über den Verriegelungsmechanismus 54a direkt mit der Rückenlehne 12a verbunden.

Die Flugzeugsitzvorrichtung 10a umfasst eine Verstauvorrichtung 58a. Die Verstauvorrichtung 58a ist an der Tischvorrichtung 16a angebunden. Die Verstauvorrichtung 58a ist fest an der Tischvorrichtung 16a angebunden. Die Verstauvorrichtung 58a ist schwenkbar gegenüber der Aufständereinheit gelagert. Die Verstauvorrichtung 58a ist schwenkbar gegenüber der Rückenlehne 12a gelagert. Die Verstauvorrichtung 58a ist zur Aufnahme von kleinen Utensilien vorgesehen. Die Verstauvorrichtung 58a ist zur Aufnahme von zumindest einem kleinen Utensil vorgesehen. Kleine Utensilien sind im vorliegenden Fall Gegenstände zum persönlichen Gebrauch, die bevorzugt an einem Körper des Passagiers oder in einem Handgepäck mitgeführt werden. Kleine Utensilien weisen eine maximale Erstreckung von höchstens 30 cm und ein maximales Volumen eines kleinsten gedachten Quaders, welcher das Utensil gerade noch vollständig umschließt, von höchstens 1000 cm³ auf. Beispielsweise ist das zumindest eine kleine Utensil als eine Brille, als ein Portemonnaie, als ein Reisepass, als ein Buch, als ein Stift, als ein Smartphone, als ein Kopfhörer, als ein Elektroanschlusskabel und/oder Elektroadapter, als ein Kaugummi oder als ein Hygiene- und/oder Körperpflegeprodukt ausgebildet. Grundsätzlich kann das zumindest eine kleine Utensil aber auch als ein Amenity Kit ausgebildet sein, welches vor einem Boarding-Vorgang bereitgestellt wird.

Die Verstauvorrichtung 58a umfasst ein Aufbewahrungselement 60a. Das Aufbewahrungselement 60a ist zur Lagerung des zumindest einen kleinen Utensils vorgesehen. Das Aufbewahrungselement 60a ist fest mit der Tischvorrichtung 16a gekoppelt. Das Aufbewahrungselement 60a ist direkt an der Tischvorrichtung 16a angebunden. Das Aufbewahrungselement 60a ist an die Lagertraverse 40a angebunden. Das Aufbewahrungselement 60a ist mittig auf der Lagertraverse 40a angeordnet. Das Aufbewahrungselement 60a ist drehfest mit der Lagertraverse 40a gekoppelt. Alternativ wäre es denkbar, dass das Aufbewahrungselement 60a schwenkbar gegenüber der Lagertraverse 40a gelagert ist. Dadurch könnte eine Ausrichtung des Aufbewahrungselements 60a während einer Verschwenkung der Tischvorrichtung 16a vorteilhaft gehalten werden, wodurch insbesondere ein Herausfallen von Utensilien aus dem Aufbewahrungselement 60a vermieden werden kann. Grundsätzlich wäre es dabei auch denkbar, dass die Verstauvorrichtung 58a zumindest ein Drehlager und/oder zumindest ein Reiblager aufweist, welche dazu vorgesehen sind, das Aufbewahrungselement 60a gegenüber der Lagertraverse 40a zu verschwenken. Das Aufbewahrungselement 60a ist formschlüssig, kraftschlüssig und/oder stoffschlüssig mit der Lagertraverse 40a verbunden. Das Aufbewahrungselement 60a ist über die Lagertraverse 40a an die Lagerarme 36a, 38a angebunden. Das Aufbewahrungselement 60a weist einen C-förmigen Querschnitt auf. Das Aufbewahrungselement 60a ist schalenartig ausgebildet. Das Aufbewahrungselement 60a weist ein festes Ende auf, über welches das Aufbewahrungselement 60a an die Lagertraverse 40a angebunden ist. Im vorliegenden Fall ist das Aufbewahrungselement 60a an dem festen Ende über zwei Befestigungselemente 62a, 64a an der Lagertraverse 40a befestigt. Die Befestigungselemente 62a, 64a können beispielsweise als Schellen ausgebildet sein. Alternativ können die Befestigungselemente 62a, 64a auch als ein Flausch- und Hakenband ausgebildet sein. Das Aufbewahrungselement 60a weist ein freies Ende 66a auf. Das freie Ende 66a des Aufbewahrungselements 60a ist zwischen der Lagertraverse 40a und dem Tischgrundkörper 20a angeordnet. Alternativ wäre es auch denkbar, dass das freie Ende 66a zwischen der Lagertraverse 40a und der Rückenlehne 12a angeordnet ist.

Das Aufbewahrungselement 60a bildet einen Aufnahmebereich 68a aus. Die Verstauvorrichtung 58a umfasst den Aufnahmebereich 68a. Der Aufnahmebereich 68a ist dazu vorgesehen, das zumindest eine kleine Utensil zu lagern. Der Aufnahmebereich 68a ist zwischen den Drehlageranbindungen 42a, 44a der Tischeinheit 18a angeordnet. Der Aufnahmebereich 68a der Verstauvorrichtung 58a ist in einem Bereich unmittelbar unterhalb des Anklappbereichs 46a der Rückenlehne 12a für die Tischeinheit 18a in ihrer Verstaustellung 32a und/oder in einem unteren Bereich 70a der Tischeinheit 18a angeordnet. Der obere Bereich 56a des Anklappbereichs 46a ist frei von der Verstauvorrichtung 58a. In der Verstaustellung 32a der Tischeinheit 18a ist der Aufnahmebereich 68a in dem unteren Bereich 70a der Tischeinheit 18a angeordnet. Der untere Bereich 70a der Tischeinheit 18a ist in der Verstaustellung 32a der Tischeinheit 18a näher an der Aufständerebene angeordnet als der obere Bereich 56a des Anklappbereichs 46a. Der untere Bereich 70a der Tischeinheit 18a erstreckt sich in der Verstaustellung 32a der Tischeinheit 18a ausgehend von einer Tischaußenkontur des Tischgrundkörpers 20a an der Tischvorderseite 28a des Tischgrundkörpers 20a um höchstens 5 cm von der Aufständerebene weg in Richtung der Tischhinterseite 30a des Tischgrundkörpers 20a. Die Tischvorderseite 28a ist in der wenigstens einen Gebrauchsstellung 34a der Tischeinheit 18a näher an der Rückenlehne 12a angeordnet als die Tischhinterseite 30a des Tischgrundkörpers 20a.

Der Aufnahmebereich 68a weist eine Befüllöffnung 72a auf. Die Befüllöffnung 72a ist zu einer Platzierung des zumindest einen kleinen Utensils in dem Aufbewahrungselement 60a vorgesehen. Die Verstauvorrichtung 58a kann mittels der Befüllöffnung 72a befüllt werden. Die Befüllöffnung 72a ist in einem Betriebszustand, in dem die Tischeinheit 18a in der Verstaustellung 32a angeordnet ist, frei, wodurch die Verstauvorrichtung 58a befüllt werden kann. In dem Betriebszustand, in dem die Tischeinheit 18a in der Verstaustellung 32a angeordnet ist, ist die Verstauvorrichtung 58a über die Befüllöffnung 72a befüllbar. Die Befüllöffnung 72a ist zwischen der Lagertraverse 40a und dem Tischgrundkörper 20a angeordnet.

Das Aufbewahrungselement 60a umfasst einen Verstauraum 74a. Der Verstauraum 74a ist innerhalb des Aufbewahrungselements 60a angeordnet. Das Aufbewahrungselement 60a umgibt den Verstauraum 74a. Der Verstauraum 74a ist Teil des Aufnahmebereichs 68a. Grundsätzlich ist es denkbar, dass das zumindest eine kleine Utensil über den Verstauraum 74a hinausragt. Dabei befindet sich das zumindest eine kleine Utensil vollständig in dem Aufnahmebereich 68a. Der Verstauraum 74a ist von dem Aufbewahrungselement 60a und von zumindest einer gedachten Fläche begrenzt, die sich zumindest zwischen dem freien Ende 66a des Aufbewahrungselements 60a und dem festen Ende des Aufbewahrungselements 60a erstreckt. Die Befüllöffnung 72a ist als ein Teilbereich der gedachten Fläche ausgebildet. Die Befüllöffnung 72a ist als eine frei zugängliche Seite des Verstauraums 74a ausgebildet. Die Befüllöffnung 72a ist permanent geöffnet. Die Befüllöffnung 72a ist in jedem Betriebszustand von einem Passagier, insbesondere ohne weitere Handlungen, erreichbar. Die Befüllöffnung 72a ist in einem weiteren Betriebszustand, in dem die Tischeinheit 18a in einer Gebrauchsstellung 34a angeordnet ist, frei.

Das Aufbewahrungselement 60a ist als ein Spritzgussbauteil aus Kunststoff ausgebildet. Das Spritzgussbauteil umfasst zumindest eine Hartkomponente. Zusätzlich kann das Spritzgussbauteil auch zumindest eine Weichkomponente umfassen. Die Weichkomponente wäre beispielsweise in dem Verstauraum 74a angeordnet. Dadurch können vorteilhaft rutschhemmende Eigenschaften des Aufbewahrungselements 60a bereitgestellt werden, wodurch ein Herausfallen des Utensils und/oder eine Beschädigung des Utensils vorteilhaft vermieden werden kann. Grundsätzlich wäre es auch denkbar, dass das Aufbewahrungselement 60a verstärkt ausgebildet ist, beispielsweise mittels eines Blechs und/oder mittels eines Faserverbunds. Alternativ wäre es auch denkbar, dass das Aufbewahrungselement 60a aus einem anderen, dem Fachmann für geeignet erscheinenden Werkstoff ausgebildet ist. Beispielsweise könnte das Aufbewahrungselement 60a aus einem Metall gebildet sein. Zusätzlich wäre es denkbar, dass das Aufbewahrungselement 60a zumindest eine Ausnehmung aufweist, die an einer Unterseite des Aufbewahrungselements angeordnet ist. Die zumindest eine Ausnehmung kann dabei als ein Durchgangsloch ausgebildet sein. Grundsätzlich wäre es denkbar, dass die zumindest eine Ausnehmung als ein Langloch ausgebildet ist. Durch eine solche Ausgestaltung kann eine Reinigung des Aufbewahrungselements 60a vorteilhaft verbessert werden.

Grundsätzlich kann das Aufbewahrungselement 60a flexibel und/oder elastisch ausgebildet sein. Dadurch ist das freie Ende 66a gegenüber dem festen Ende bewegbar, wobei insbesondere keine plastische Verformung des Aufbewahrungselements 60a auftritt. Durch eine solche Ausgestaltung kann vorteilhaft ermöglicht werden, dass die Befüllöffnung 72a, insbesondere während einer Krafteinwirkung auf das freie Ende 66a, zeitweise vergrößerbar ist. Alternativ oder zusätzlich wäre es auch denkbar, dass das Aufbewahrungselement 60a zweiteilig oder mehrteilig ausgebildet ist. Dabei wäre es denkbar, dass das Aufbewahrungselement 60a eine verrastbare Lagerung, eine Reiblagerung und/oder eine Federbeaufschlagung aufweist, die ein mit dem freien Ende 66a verbundenes Teil des Aufbewahrungselements 60a an zumindest einem festen Teil des Aufbewahrungselements 60a beweglich lagert.

Die Tischeinheit 18a weist an ihrer Anbindungsseite, an der die Tischeinheit 18a gelagert ist, eine Aussparung 76a auf, in die sich die Verstauvorrichtung 58a, insbesondere das Aufbewahrungselement 60a, erstreckt. Die Aussparung 76a ist mittig an der Tischvorderseite 28a des Tischgrundkörpers 20a angeordnet. Der Tischgrundkörper 20a weist zwischen der Tischvorderseite 28a und der Tischhinterseite 30a in einem Bereich der Aussparung 76a eine geringere maximale Erstreckung auf als in einem Bereich abseits der Aussparung 76a. Der Tischgrundkörper 20a weist zwischen der Tischvorderseite 28a und der Tischhinterseite 30a in dem Bereich der Aussparung 76a eine maximale Erstreckung auf, die mindestens 10 % kleiner ist als eine maximale Erstreckung in dem Bereich abseits der Aussparung 76a. Die Aussparung 76a erstreckt sich vollständig zwischen der Tischoberseite 22a des Tischgrundkörpers 20a und der Tischunterseite 26a des Tischgrundkörpers 20a. Die Tischaußenkontur des Tischgrundkörpers 20a ist an der Tischvorderseite 28a des Tischgrundkörpers 20a in dem Bereich der Aussparung 76a näher an der Tischhinterseite 30a des Tischgrundkörpers 20a angeordnet als in einem Bereich abseits der Aussparung 76a. Die Aussparung 76a weist eine Längserstreckung von mindestens 150 mm auf. Die Längserstreckung ist parallel zu der Lagertraverse 40a gemessen. Die Aussparung 76a weist eine maximale Quererstreckung von mindestens 20 mm auf, die senkrecht zu der Lagertraverse 40a gemessen ist. Das Aufbewahrungselement 60a erstreckt sich in der Verstaustellung 32a in die Aussparung 76a. Das Aufbewahrungselement 60a erstreckt sich in zumindest einer der Gebrauchsstellungen 34a in die Aussparung 76a.

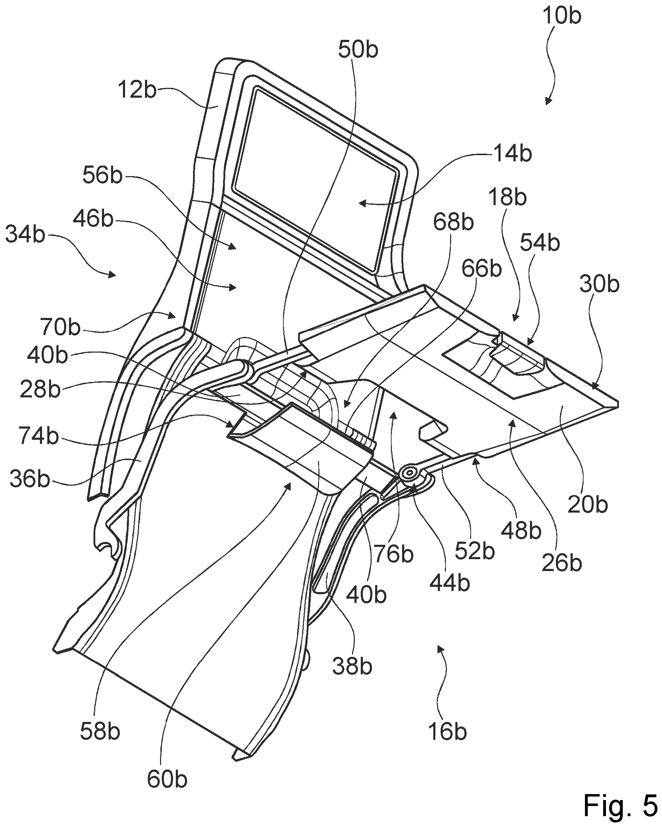

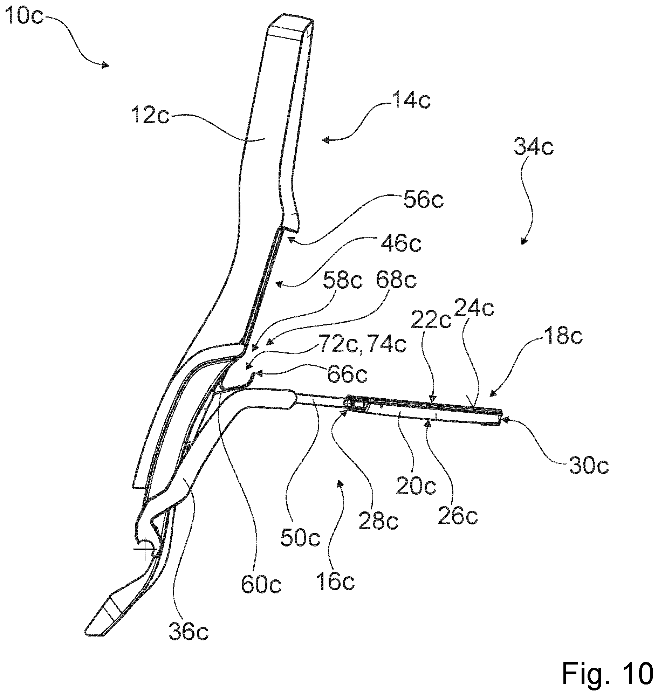

In den Figuren 5 bis 12 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 12 ist der Buchstabe a durch die Buchstaben b bis d ersetzt.

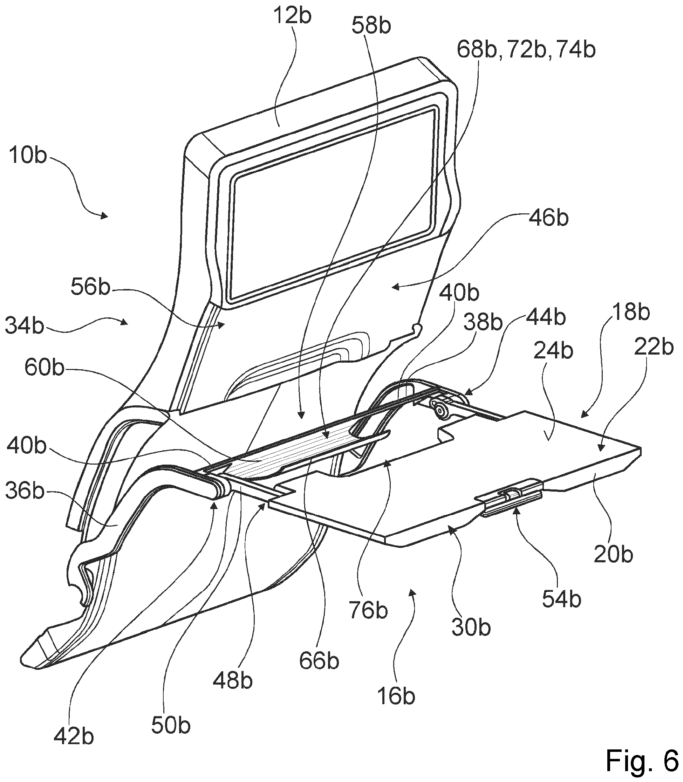

In den Figuren 5 und 6 ist eine Flugzeugsitzvorrichtung 10b in einem zweiten Ausführungsbeispiel gezeigt. Die Flugzeugsitzvorrichtung 10b umfasst eine Rückenlehne 12b. Die Rückenlehne 12b weist eine Rückseite 14b auf. Die Rückenlehne 12b weist einen Anklappbereich 46b auf. Die Flugzeugsitzvorrichtung 10b umfasst eine Tischvorrichtung 16b. Die Tischvorrichtung 16b weist eine schwenkbar an der Rückenlehne 12b angeordnete Tischeinheit 18b auf. Die Tischeinheit 18b weist einen Tischgrundkörper 20b auf. Der Tischgrundkörper 20b weist eine Tischoberseite 22b auf. Die Tischeinheit 18b bildet an der Tischoberseite 22b eine Abstell- und/oder Ablagefläche 24b aus. Der Tischgrundkörper 20b weist eine Tischunterseite 26b auf. Der Tischgrundkörper 20b weist eine Tischvorderseite 28b auf. Der Tischgrundkörper 20b weist eine Tischhinterseite 30b auf. Die Tischeinheit 18b weist eine nicht näher dargestellte Verstaustellung und wenigstens eine Gebrauchsstellung 34b auf. Die Tischvorrichtung 16b weist zwei Lagerarme 36b, 38b auf. Die Tischvorrichtung 16b weist eine Lagertraverse 40b auf. Die Tischeinheit 18b weist zwei Drehlageranbindungen 42b, 44b auf. Die Tischeinheit 18b weist einen Auszugmechanismus 48b auf. Der Auszugmechanismus 48b weist zwei Trägerelemente 50b, 52b auf. Die Tischvorrichtung 16b weist einen Verriegelungsmechanismus 54b auf. Die Flugzeugsitzvorrichtung 10b umfasst eine Verstauvorrichtung 58b. Die Verstauvorrichtung 58b umfasst ein Aufbewahrungselement 60b. Das Aufbewahrungselement 60b ist an die Lagertraverse 40b angebunden. Das Aufbewahrungselement 60b weist ein freies Ende 66b auf, welches zwischen der Lagertraverse 40b und dem Tischgrundkörper 20b angeordnet ist. Alternativ wäre es auch denkbar, dass das freie Ende 66b zwischen der Lagertraverse 40b und der Rückenlehne 12b angeordnet ist. Das Aufbewahrungselement 60b bildet einen Aufnahmebereich 68b aus. Der Aufnahmebereich 68b der Verstauvorrichtung 58b ist in einem Bereich unmittelbar unterhalb des Anklappbereichs 46b der Rückenlehne 12b für die Tischeinheit 18b in ihrer Verstaustellung 32b und/oder in einem unteren Bereich 70b der Tischeinheit 18b angeordnet. Der Aufnahmebereich 68b weist eine Befüllöffnung 72b auf. Das Aufbewahrungselement 60b umfasst einen Verstauraum 74b. Die Tischeinheit 18b weist an ihrer Anbindungsseite, an der die Tischeinheit 18b gelagert ist, eine Aussparung 76b auf, in die sich die Verstauvorrichtung 58b, insbesondere das Aufbewahrungselement 60b, erstreckt.

Im Unterschied zu dem ersten Ausführungsbeispiel in den Figuren 1 bis 4 ist das Aufbewahrungselement 60b alternativ an die Tischvorrichtung 16b angebunden. Das Aufbewahrungselement 60b bildet die Lagertraverse 40b zumindest in einem Teilbereich aus. Das Aufbewahrungselement 60b bildet die Lagertraverse 40b zu mindestens 30 % einer maximalen Erstreckung der Lagertraverse 40b aus. Das Aufbewahrungselement 60b ist einstückig mit der Lagertraverse 40b ausgebildet. Das Aufbewahrungselement 60b ist als ein faserverstärktes Spritzgussbauteil ausgebildet. Die Lagertraverse 40b ist als ein faserverstärktes Spritzgussbauteil ausgebildet. Im vorliegenden Fall sind das Aufbewahrungselement 60b und die Lagertraverse 40b aus einem Guss hergestellt.

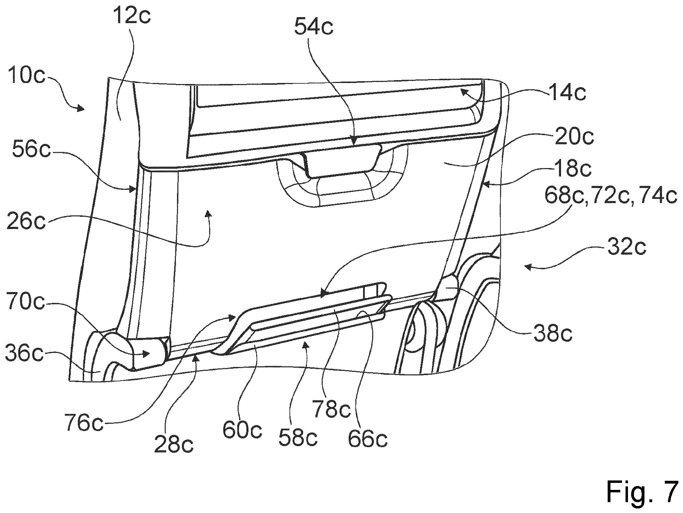

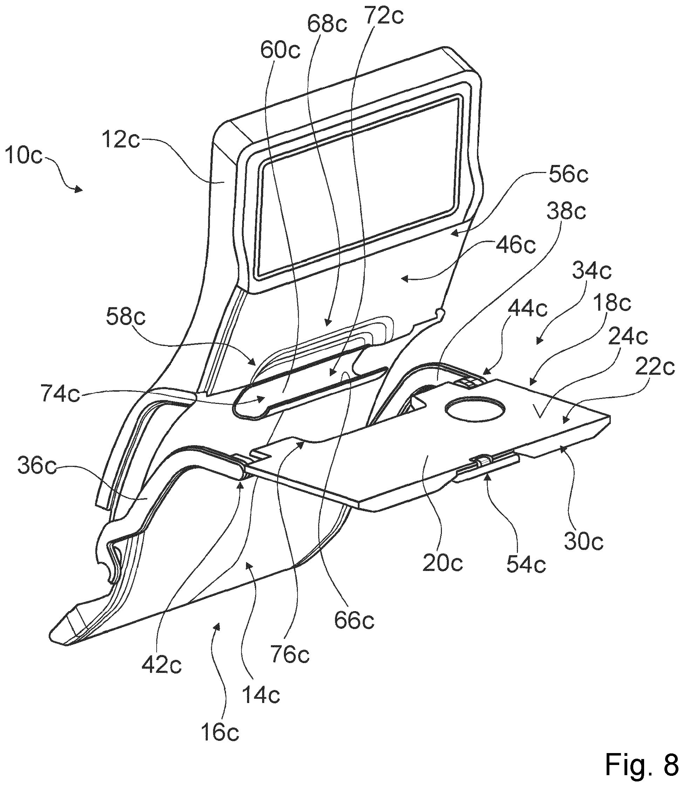

In den Figuren 7 bis 10 ist eine Flugzeugsitzvorrichtung 10c in einem dritten Ausführungsbeispiel gezeigt. Die Flugzeugsitzvorrichtung 10c umfasst eine Rückenlehne 12c. Die Rückenlehne 12c weist eine Rückseite 14c auf. Die Rückenlehne 12c weist einen Anklappbereich 46c auf. Die Flugzeugsitzvorrichtung 10c umfasst eine Tischvorrichtung 16c. Die Tischvorrichtung 16c weist eine gegenüber der Rückenlehne 12c schwenkbar angeordnete Tischeinheit 18c auf. Die Tischeinheit 18c weist einen Tischgrundkörper 20c auf. Der Tischgrundkörper 20c weist eine Tischoberseite 22c auf. Die Tischeinheit 18c bildet an der Tischoberseite 22c eine Abstell- und/oder Ablagefläche 24c aus. Der Tischgrundkörper 20c weist eine Tischunterseite 26c auf. Der Tischgrundkörper 20c weist eine Tischvorderseite 28c auf. Der Tischgrundkörper 20c weist eine Tischhinterseite 30c auf. Die Tischeinheit 18c weist eine Verstaustellung 32c (vgl. Fig. 7) und wenigstens eine Gebrauchsstellung 34c (vgl. Fig. 8 bis 10) auf. Die Tischvorrichtung 16c weist zwei Lagerarme 36c, 38c auf. Die Tischvorrichtung 16c weist eine Lagertraverse 40c auf. Die Tischeinheit 18c weist zwei Drehlageranbindungen 42c, 44c auf. Die Tischeinheit 18c weist einen Auszugmechanismus 48c auf. Die Tischvorrichtung 16c weist einen Verriegelungsmechanismus 54c auf. Die Flugzeugsitzvorrichtung 10c umfasst eine Verstauvorrichtung 58c. Die Verstauvorrichtung 58c ist zur Aufnahme von zumindest einem kleinen Utensil 78c vorgesehen. Im vorliegenden Fall ist das zumindest eine kleine Utensil 78c beispielsweise als ein Smartphone ausgebildet. Die Verstauvorrichtung 58c umfasst ein Aufbewahrungselement 60c. Das Aufbewahrungselement 60c bildet einen Aufnahmebereich 68c aus. Der Aufnahmebereich 68c der Verstauvorrichtung 58c ist in einem Bereich unmittelbar unterhalb des Anklappbereichs 46c der Rückenlehne 12c für die Tischeinheit 18c in ihrer Verstaustellung 32c und/oder in einem unteren Bereich 70c der Tischeinheit 18c in der Gebrauchsstellung 34c angeordnet. Der Aufnahmebereich 68c weist eine Befüllöffnung 72c auf. Das Aufbewahrungselement 60c umfasst einen Verstauraum 74c. Die Tischeinheit 18c weist an ihrer Anbindungsseite, an der die Tischeinheit 18c gelagert ist, eine Aussparung 76c auf, in die sich die Verstauvorrichtung 58c, insbesondere das Aufbewahrungselement 60c, erstreckt.

Im Unterschied zu dem ersten Ausführungsbeispiel in den Figuren 1 bis 4 ist die Verstauvorrichtung 58c an der Rückenlehne 12c angeordnet. Das Aufbewahrungselement 60c ist an der Rückseite 14c der Rückenlehne 12c angebracht. Das Aufbewahrungselement 60c ist einstückig an der Rückseite 14c der Rückenlehne 12c angeformt oder angebunden. Das Aufbewahrungselement 60c ist einstückig mit der Rückenlehne 12c ausgebildet. Das Aufbewahrungselement 60c ist formschlüssig, kraftschlüssig und/oder stoffschlüssig mit der Rückenlehne 12c verbunden. Das Aufbewahrungselement 60c ist stationär gegenüber der Rückenlehne 12c ausgebildet. Das Aufbewahrungselement 60c weist einen C-förmigen Querschnitt auf. Das Aufbewahrungselement 60c ist schalenartig ausgebildet. Das Aufbewahrungselement 60c weist ein festes Ende auf, über welches das Aufbewahrungselement 60c direkt an die Rückenlehne 12c angebunden ist. Das Aufbewahrungselement 60c weist ein freies Ende 66c auf. Das freie Ende 66c des Aufbewahrungselements 60c ist zwischen der Rückenlehne 12c und der Lagertraverse 40c angeordnet. Die Lagertraverse 40c ist beweglich gegenüber dem Aufbewahrungselement 60c ausgebildet.

Der Aufnahmebereich 68c erstreckt sich bis in den Anklappbereich 46c hinter der angeklappten Tischeinheit 18c. Die Rückenlehne 12c ist in dem Anklappbereich 46c in der Verstaustellung 32c der Tischeinheit 18c teilweise von der Tischeinheit 18c, insbesondere dem Tischgrundkörper 20c, beabstandet, wobei ein Abstand zwischen der Rückenlehne 12c und der Tischeinheit 18c, insbesondere dem Tischgrundkörper 20c, teilweise den Aufnahmebereich 68c ausbildet. Ein maximaler Abstand zwischen der Rückenlehne 12c und der Tischeinheit 18c in der Verstaustellung 32c der Tischeinheit 18c beträgt in dem Aufnahmebereich 68c mindestens 20 mm.

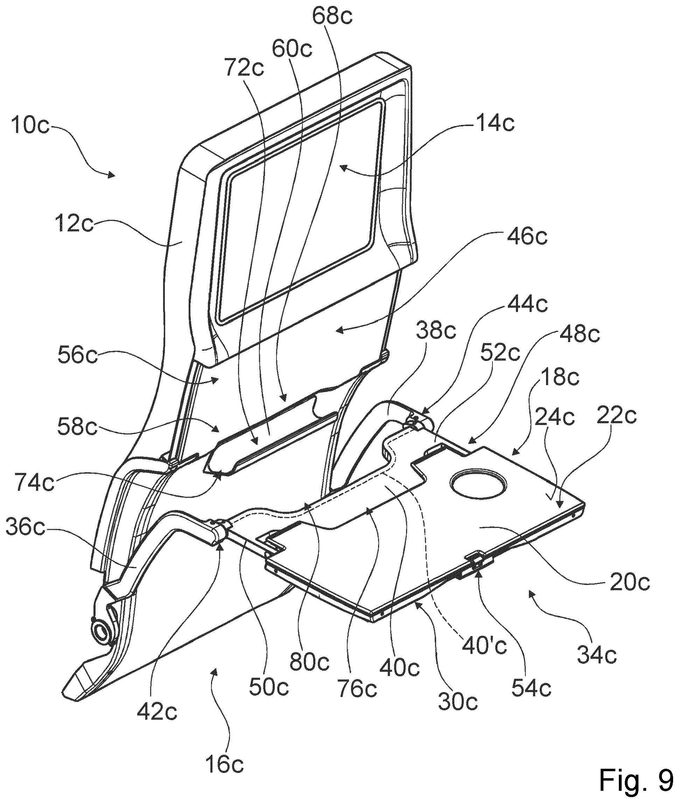

Der Auszugmechanismus 48c weist zwei Trägerelemente 50c, 52c auf, welche einstückig mit der Lagertraverse 40c ausgebildet sind. Die Lagertraverse 40c ist plattenförmig ausgebildet. Die Lagertraverse 40c ist als ein Einschub ausgebildet, welcher dazu vorgesehen ist, in einen Hohlraum des Tischgrundkörpers 20c eingeschoben zu werden. Durch diese Ausgestaltung kann die Abstell- und/oder Ablagefläche 24c vorteilhaft variiert werden. Alternativ wäre es auch denkbar, dass die Tischvorrichtung 16c eine Lagertraverse 40'c aufweist, welche stabförmig und gekrümmt ausgebildet ist. Dabei würde die Lagertraverse 40'c entlang einer Kontur der Aussparung 76c verlaufen. Zur Verdeutlichung dieser alternativen Ausgestaltung ist die Lagertraverse 40'c in der Figur 9 gestrichelt dargestellt. Im vorliegenden Fall weist die Lagertraverse 40c eine weitere Aussparung 80c auf. Die weitere Aussparung 80c ist in der Verstaustellung 32c der Tischeinheit 18c überlappend zu der Aussparung 76c angeordnet. Die weitere Aussparung 80c weist eine zumindest im Wesentlichen gleiche Kontur auf, wie die Aussparung 76c.

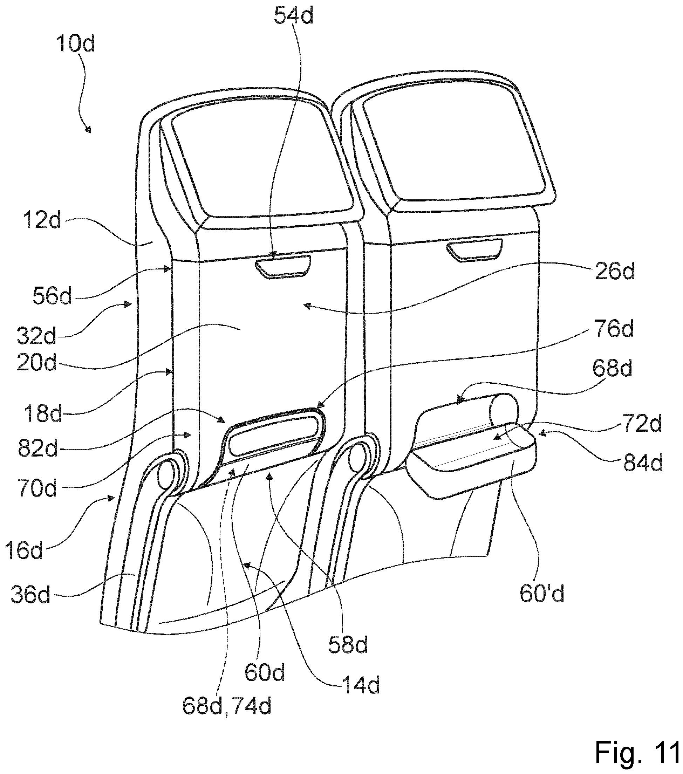

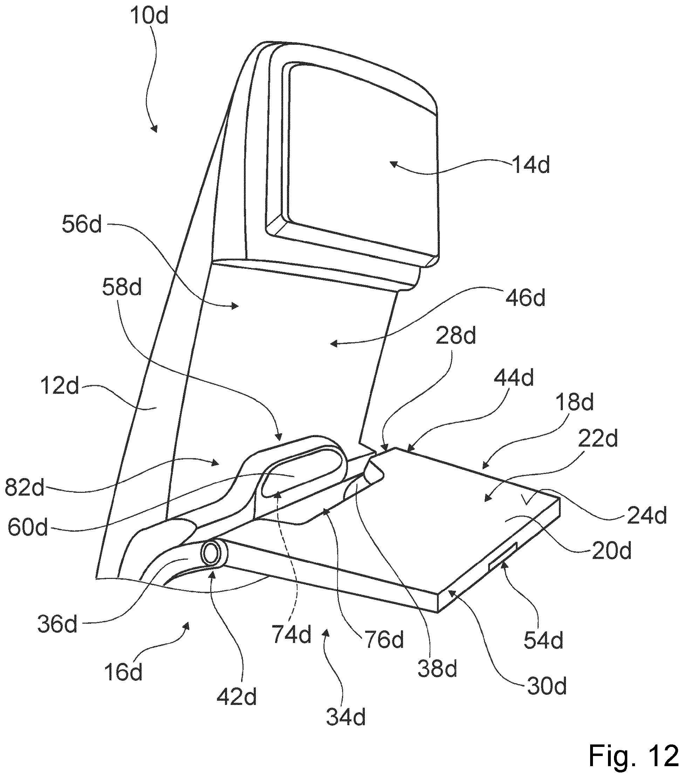

In den Figuren 11 und 12 ist eine Flugzeugsitzvorrichtung 10d in einem vierten Ausführungsbeispiel gezeigt. Die Flugzeugsitzvorrichtung 10d umfasst eine Rückenlehne 12d. Die Rückenlehne 12d weist eine Rückseite 14d auf. Die Rückenlehne 12d weist einen Anklappbereich 46d auf. Die Flugzeugsitzvorrichtung 10d umfasst eine Tischvorrichtung 16d. Die Tischvorrichtung 16d weist eine schwenkbar an der Rückenlehne 12d angeordnete Tischeinheit 18d auf. Die Tischeinheit 18d weist einen Tischgrundkörper 20d auf. Der Tischgrundkörper 20d weist eine Tischoberseite 22d auf. Die Tischeinheit 18d bildet an der Tischoberseite 22d eine Abstell- und/oder Ablagefläche 24d aus. Der Tischgrundkörper 20d weist eine Tischunterseite 26d auf. Der Tischgrundkörper 20d weist eine Tischvorderseite 28d auf. Der Tischgrundkörper 20d weist eine Tischhinterseite 30d auf. Die Tischeinheit 18d weist eine Verstaustellung 32d (vgl. Fig. 11) und wenigstens eine Gebrauchsstellung 34d (vgl. Fig. 12) auf. Die Tischvorrichtung 16d weist zwei Lagerarme 36d, 38d auf. Die Tischvorrichtung 16d kann eine nicht näher dargestellte Lagertraverse aufweisen. Die Tischeinheit 18d weist zwei Drehlageranbindungen 42d, 44d auf. Die Tischeinheit 18d weist optional einen nicht näher dargestellten Auszugmechanismus auf. Die Tischvorrichtung 16d weist einen Verriegelungsmechanismus 54d auf. Die Flugzeugsitzvorrichtung 10d umfasst eine Verstauvorrichtung 58d. Die Verstauvorrichtung 58d umfasst ein Aufbewahrungselement 60d. Das Aufbewahrungselement 60d bildet einen Aufnahmebereich 68d aus. Der Aufnahmebereich 68d der Verstauvorrichtung 58b ist in einem unteren Bereich 70d der Tischeinheit 18d angeordnet. Der Aufnahmebereich 68d weist eine Befüllöffnung 72d auf. Das Aufbewahrungselement 60d umfasst einen Verstauraum 74d. Die Tischeinheit 18d weist an ihrer Anbindungsseite, an der die Tischeinheit 18d gelagert ist, eine Aussparung 76d auf, in die sich die Verstauvorrichtung 58d, insbesondere das Aufbewahrungselement 60d, erstreckt.

Im Unterschied zu dem dritten Ausführungsbeispiel in den Figuren 7 bis 10 ist das Aufbewahrungselement 60d alternativ ausgebildet. Das Aufbewahrungselement 60d ist schwenkbar gelagert. Das Aufbewahrungselement 60d ist schwenkbar an der Rückenlehne 12d gelagert. Das Aufbewahrungselement 60d ist wannenförmig ausgebildet. Das Aufbewahrungselement 60d weist einen geschlossenen Zustand 82d und einen geöffneten Zustand 84d auf. In der Figur 11 ist ein weiteres Aufbewahrungselement 60'd dargestellt, welches sich in dem geöffneten Zustand 84d befindet, wobei das weitere Aufbewahrungselement 60'd identisch zu dem Aufbewahrungselement 60d ausgebildet ist. Das Aufbewahrungselement 60d ist zwischen dem geschlossenen Zustand 82d und dem geöffneten Zustand 84d verschwenkbar. Die Befüllöffnung 72d ist lediglich in dem geöffneten Zustand 84d erreichbar. In dem geschlossenen Zustand 82d weist der Aufnahmebereich 68d eine selbe Größe auf wie der Verstauraum 74d. In dem geöffneten Zustand 84d kann der Aufnahmebereich 68d aus dem Verstauraum 74d hinausragen. In der Verstaustellung 32d der Tischeinheit 18d ist das Aufbewahrungselement 60d in der Aussparung 76d angeordnet, insbesondere in dem geschlossenen Zustand 82d des Aufbewahrungselements 60d. In der Verstaustellung 32d der Tischeinheit 18d und in dem geschlossenen Zustand 82d des Aufbewahrungselements 60d füllt das Aufbewahrungselement 60d die Aussparung 76d zumindest im Wesentlichen vollständig aus. In dem geschlossenen Zustand 82d des Aufbewahrungselements 60d und in der Verstaustellung 32d der Tischeinheit 18d ist eine Oberfläche des Aufbewahrungselements 60d zumindest im Wesentlichen bündig mit der Tischunterseite 26d ausgebildet. In der Verstaustellung 32d der Tischeinheit 18d ist eine Schwenkachse des Aufbewahrungselements 60d höchstens 30 mm von der Tischvorderseite 28d entfernt.

Grundsätzlich wäre es denkbar, dass das Aufbewahrungselement 60d zumindest teilweise aus einem transparenten Material gebildet ist. Dadurch könnte eine Einsehbarkeit des Verstauraums 74d und/oder des Aufnahmebereichs 68d vorteilhaft ermöglicht werden, wenn das Aufbewahrungselement 60d geschlossen ist.

Die Verstauvorrichtung 58d weist eine nicht näher dargestellte Verriegelungseinheit auf. Die Verriegelungseinheit ist dazu vorgesehen, das Aufbewahrungselement 60d in dem geschlossenen Zustand 82d zu verriegeln. Die Verriegelungseinheit weist zumindest ein nicht näher dargestelltes Federelement auf, mittels dem das Aufbewahrungselement 60d von dem geschlossenen Zustand 82d in den geöffneten Zustand 84d überführbar ist. Ein Passagier kann das Aufbewahrungselement 60d durch eine Druckbetätigung auf das Aufbewahrungselement 60d von dem geschlossenen Zustand 82d in den geöffneten Zustand 84d überführen. Zusätzlich oder alternativ wäre es auch denkbar, dass das Aufbewahrungselement 60d elektromechanisch zwischen dem geschlossenen Zustand 82d und dem geöffneten Zustand 84d verstellbar ist.

Zusätzlich wäre es denkbar, dass die Verstauvorrichtung 58d eine Energieschnittstelle und/oder eine Kommunikationsschnittstelle aufweist. Durch diese Ausgestaltung könnte beispielsweise ein Smartphone vorteilhaft in dem Aufbewahrungselement 60d mit elektrischer Energie versorgt werden und/oder vorteilhaft Daten mit einem In-Flight-Entertainment-System eines Flugzeugs austauschen.

## Patentansprüche

1. Flugzeugsitzvorrichtung mit einer Rückenlehne (12a; 12b; 12c; 12d), mit einer Tischvorrichtung (16a; 16b; 16c; 16d), die eine schwenkbar an der Rückenlehne (12a; 12b; 12c; 12d) angeordnete Tischeinheit (18a; 18b; 18c; 18d) aufweist, wobei die Tischeinheit (18a; 18b; 18c; 18d) in einer Verstaustellung (32a; 32c; 32d) an einen Anklappbereich (46a; 46b; 46c; 46d) der Rückenlehne (12a; 12b; 12c; 12d) anklappbar ist, und mit einer Verstauvorrichtung (58a; 58b; 58c; 58d), die zur Aufnahme von kleinen Utensilien (78c) vorgesehen ist und ein Aufbewahrungselement (60a; 60b; 60c; 60d) umfasst, das einen Aufnahmebereich (68a; 68b; 68c; 68d) ausbildet, wobei der Aufnahmebereich (68a; 68b; 68c; 68d) der Verstauvorrichtung (58a; 58b; 58c; 58d) in einem Bereich unmittelbar unterhalb des Anklappbereichs (46a; 46b; 46c; 46d) der Rückenlehne (12a; 12b; 12c; 12d) für die Tischeinheit (18a; 18b; 18c; 18d) in ihrer Verstaustellung (32a; 32b; 32c; 32d) und in einem unteren Bereich (70a; 70b; 70c; 70d) der Tischeinheit (18a; 18b; 18c; 18d) angeordnet ist, wobei ein oberer Bereich (56a; 56b; 56c; 56d) des Anklappbereichs (46a; 46b; 46c; 46d) frei von der Verstauvorrichtung (58a; 58b; 58c; 58d) ist, wobei der Aufnahmebereich (68a; 68b; 68c; 68d) eine Befüllöffnung (72a; 72b; 72c; 72d) aufweist, die in einem Betriebszustand, in dem die Tischeinheit (18a; 18b; 18c; 18d) in der Verstaustellung (32a; 32b; 32c; 32d) angeordnet ist, frei ist, wodurch die Verstauvorrichtung (58a; 58b; 58c; 58d) befüllt werden kann, **dadurch gekennzeichnet, dass** die Tischeinheit (18a; 18b; 18c; 18d) an ihrer Anbindungsseite, an der die Tischeinheit (18a; 18b; 18c; 18d) gelagert ist, eine Aussparung (76a; 76b; 76c; 76d) aufweist, in die sich die Verstauvorrichtung (58a; 58b; 58c; 58d) erstreckt.

2. Flugzeugsitzvorrichtung nach Anspruch 1, **dadurch gekennzeichnet, dass** die Verstauvorrichtung (58a; 58b) an der Tischvorrichtung (16a; 16b) angebunden ist.

3. Flugzeugsitzvorrichtung nach Anspruch 2, **dadurch gekennzeichnet, dass** das Aufbewahrungselement (60a; 60b) fest mit der Tischvorrichtung (16a; 16b) gekoppelt ist.

4. Flugzeugsitzvorrichtung nach einem der vorhergehenden Ansprüche, **dadurch gekennzeichnet, dass** der Aufnahmebereich (68a; 68b; 68c; 68d) zwischen Drehlageranbindungen (42a, 44a; 42b, 44b; 42c, 44c; 42d, 44d) der Tischeinheit (18a; 18b; 18c; 18d) angeordnet ist.

5. Flugzeugsitzvorrichtung nach einem der vorhergehenden Ansprüche, **dadurch gekennzeichnet, dass** die Tischvorrichtung (16a; 16b) eine Lagertraverse (40a; 40b) aufweist, an die das Aufbewahrungselement (60a; 60b) angebunden ist.

6. Flugzeugsitzvorrichtung nach Anspruch 5, **dadurch gekennzeichnet, dass** das Aufbewahrungselement (60b) die Lagertraverse (40b) zumindest in einem Teilbereich ausbildet.

7. Flugzeugsitzvorrichtung nach einem der vorhergehenden Ansprüche, **dadurch gekennzeichnet, dass** die Tischvorrichtung (16a; 16b) Lagerarme (36a, 38a; 36b; 38b) aufweist, an die das Aufbewahrungselement (60a; 60b) angebunden ist.

8. Flugzeugsitzvorrichtung nach einem der vorhergehenden Ansprüche, **dadurch gekennzeichnet, dass** die Aussparung (76a; 76b; 76c; 76d) eine Längserstreckung von mindestens 150 mm, insbesondere mindestens 200 mm, aufweist.

9. Flugzeugsitzvorrichtung nach Anspruch 1, **dadurch gekennzeichnet, dass** die Verstauvorrichtung (58c; 58d) an der Rückenlehne (12c; 12d) angeordnet ist, wobei das Aufbewahrungselement (60c; 60d) an eine Rückseite (14c; 14d) der Rückenlehne (12c; 12d) angebracht ist.

10. Flugzeugsitzvorrichtung nach Anspruch 9, **dadurch gekennzeichnet, dass** das Aufbewahrungselement (60c) einstückig mit der Rückenlehne (12c) ausgebildet ist.

11. Flugzeugsitzvorrichtung nach einem der vorhergehenden Ansprüche, **dadurch gekennzeichnet, dass** sich der Aufnahmebereich (68a; 68b; 68c) bis in den Anklappbereich (46a; 46b; 46c) hinter der angeklappten Tischeinheit (18a; 18b; 18c) erstreckt.

12. Flugzeugsitz mit einer Flugzeugsitzvorrichtung (10a; 10b; 10c; 10d) nach einem der Ansprüche 1 bis 11.

## Claims

1. Aircraft seat device having a backrest (12a; 12b; 12c; 12d), having a table device (16a; 16b; 16c; 16d) which has a table unit (18a; 18b; 18c; 18d) which is pivotably arranged on the backrest (12a; 12b; 12c; 12d), wherein the table unit (18a; 18b; 18c; 18d) can be folded in a stowed position (32a; 32c; 32d) onto a folding-on region (46a; 46b; 46c; 46d) of the backrest (12a; 12b; 12c; 12d), and having a stowage device (58a; 58b; 58c; 58d) which is configured for receiving small utensils (78c) and comprises a storage element (60a; 60b; 60c; 60d) which forms a receiving region (68a; 68b; 68c; 68d), wherein the receiving region (68a; 68b; 68c; 68d) of the stowage device (58a; 58b; 58c; 58d) is arranged in a region directly below the folding-on region (46a; 46b; 46c; 46d) of the backrest (12a; 12b; 12c; 12d) for the table unit (18a; 18b; 18c; 18d) in its stowed position (32a; 32b; 32c; 32d) and in a lower region (70a; 70b; 70c; 70d) of the table unit (18a; 18b; 18c; 18d), wherein an upper region (56a; 56b; 56c; 56d) of the folding-on region (46a; 46b; 46c; 46d) is free of the stowage device (58a; 58b; 58c; 58d), wherein the receiving region (68a; 68b; 68c; 68d) has a filling opening (72a; 72b; 72c; 72d) which is free in an operating state in which the table unit (18a; 18b; 18c; 18d) is arranged in the stowed position (32a; 32b; 32c; 32d), as a result of which the stowage device (58a; 58b; 58c; 58d) can be filled, **characterized in that** the table unit (18a; 18b; 18c; 18d) has, on its attachment side on which the table unit (18a; 18b; 18c; 18d) is supported, a recess (76a; 76b; 76c; 76d) into which the stowage device (58a; 58b; 58c; 58d) extends.

2. Aircraft seat device according to claim 1, **characterized in that** the stowage device (58a; 58b) is attached to the table device (16a; 16b).

3. Aircraft seat device according to claim 2, **characterized in that** the storage element (60a; 60b) is fixedly coupled to the table device (16a; 16b).

4. Aircraft seat device according to one of the preceding claims, **characterized in that** the receiving region (68a; 68b; 68c; 68d) is arranged between rotary bearing attachments (42a, 44a; 42b, 44b; 42c, 44c; 42d, 44d) of the table unit (18a; 18b; 18c; 18d).

5. Aircraft seat device according to one of the preceding claims, **characterized in that** the table device (16a; 16b) has a bearing crossbeam (40a; 40b) to which the storage element (60a; 60b) is attached.

6. Aircraft seat device according to claim 5, **characterized in that** the storage element (60b) forms the bearing crossbeam (40b) at least in a partial region.

7. Aircraft seat device according to one of the preceding claims, **characterized in that** the table device (16a; 16b) has bearing arms (36a, 38a; 36b; 38b) to which the storage element (60a; 60b) is attached.

8. Aircraft seat device according to one of the preceding claims, **characterized in that** the recess (76a; 76b; 76c; 76d) has a longitudinal extent of at least 150 mm, in particular at least 200 mm.

9. Aircraft seat device according to claim 1, **characterized in that** the stowage device (58c; 58d) is arranged on the backrest (12c; 12d), wherein the storage element (60c; 60d) is mounted on a rear side (14c; 14d) of the backrest (12c; 12d).

10. Aircraft seat device according to claim 9, **characterized in that** the storage element (60c) is formed in one piece with the backrest (12c).

11. Aircraft seat device according to one of the preceding claims, **characterized in that** the receiving region (68a; 68b; 68c) extends into the folding-on region (46a; 46b; 46c) behind the folded-on table unit (18a; 18b; 18c).

12. Aircraft seat having an aircraft seat device (10a; 10b; 10c; 10d) according to one of claims 1 to 11.

## Revendications

1. Dispositif de siège d'avion avec un dossier (12a ; 12b ; 12c ; 12d), avec un dispositif de table (16a ; 16b ; 16c ; 16d) qui présente une unité de table (18a ; 18b ; 18c ; 18d) disposée de manière pivotante sur le dossier (12a ; 12b ; 12c ; 12d), où l'unité de table (18a ; 18b ; 18c ; 18d) peut être rabattue dans une position de rangement (32a ; 32c ; 32d) sur une zone de rabattement (46a ; 46b ; 46c ; 46d) du dossier (12a ; 12b ; 12c ; 12d), et avec un dispositif de rangement (58a ; 58b ; 58c ; 58d) qui est prévu pour recevoir de petits ustensiles (78c) et comprend un élément de rangement (60a ; 60b ; 60c ; 60d) qui forme une zone de réception (68a ; 68b ; 68c ; 68d), où la zone de réception (68a ; 68b ; 68c ; 68d) du dispositif de rangement (58a ; 58b ; 58c ; 58d) est disposée dans une zone directement en dessous de la zone de rabattement (46a ; 46b ; 46c ; 46d) du dossier (12a ; 12b ; 12c ; 12d) pour l'unité de table (18a ; 18b ; 18c ; 18d) dans sa position de rangement (32a ; 32b ; 32c ; 32d) et dans une zone inférieure (70a ; 70b ; 70c ; 70d) de l'unité de table (18a ; 18b ; 18c ; 18d), où une zone supérieure (56a ; 56b ; 56c ; 56d) de la zone de rabattement (46a ; 46b ; 46c ; 46d) est exempte du dispositif de rangement (58a ; 58b ; 58c ; 58d), où la zone de réception (68a ; 68b ; 68c ; 68d) présente une ouverture de remplissage (72a ; 72b ; 72c ; 72d) qui est libre dans un état de fonctionnement dans lequel l'unité de table (18a ; 18b ; 18c ; 18d) est disposée dans la position de rangement (32a ; 32b ; 32c ; 32d), moyennant quoi le dispositif de rangement (58a ; 58b ; 58c ; 58d) peut être rempli, **caractérisé en ce que** l'unité de table (18a ; 18b ; 18c ; 18d) présente sur son côté de raccordement sur lequel l'unité de table (18a ; 18b ; 18c ; 18d) est supportée, un évidement (76a ; 76b ; 76c ; 76d) dans lequel s'étend le dispositif de rangement (58a ; 58b ; 58c ; 58d).

2. Dispositif de siège d'avion selon la revendication 1, **caractérisé en ce que le** dispositif de rangement (58a ; 58b) est attaché au dispositif de table (16a ; 16b).

3. Dispositif de siège d'avion selon la revendication 2, **caractérisé en ce que** l'élément de rangement (60a ; 60b) est couplé fixement au dispositif de table (16a ; 16b).

4. Dispositif de siège d'avion selon l'une quelconque des revendications précédentes, **caractérisé en ce que** la zone de réception (68a ; 68b ; 68c ; 68d) est disposée entre des raccordements de palier rotatif (42a, 44a ; 42b, 44b ; 42c, 44c ; 42d, 44d) de l'unité de table (18a ; 18b ; 18c ; 18d).

5. Dispositif de siège d'avion selon l'une quelconque des revendications précédentes, **caractérisé en ce que** le dispositif de table (16a ; 16b) présente une traverse de palier (40a ; 40b) à laquelle l'élément de rangement (60a ; 60b) est attaché.

6. Dispositif de siège d'avion selon la revendication 5, **caractérisé en ce que** l'élément de rangement (60b) forme la traverse de palier (40b) au moins dans une zone partielle.

7. Dispositif de siège d'avion selon l'une quelconque des revendications précédentes, **caractérisé en ce que** le dispositif de table (16a ; 16b) présente des bras de palier (36a, 38a ; 36b ; 38b) auxquels l'élément de rangement (60a ; 60b) est attaché.

8. Dispositif de siège d'avion selon l'une quelconque des revendications précédentes, **caractérisé en ce que** l'évidement (76a ; 76b ; 76c ; 76d) présente une étendue longitudinale d'au moins 150 mm, en particulier d'au moins 200 mm.

9. Dispositif de siège d'avion selon la revendication 1, **caractérisé en ce que** le dispositif de rangement (58c ; 58d) est disposé sur le dossier (12c ; 12d), où l'élément de rangement (60c ; 60d) est monté sur un côté arrière (14c ; 14d) du dossier (12c ; 12d).

10. Dispositif de siège d'avion selon la revendication 9, **caractérisé en ce que** l'élément de rangement (60c) est réalisé d'une seule pièce avec le dossier (12c).

11. Dispositif de siège d'avion selon l'une quelconque des revendications précédentes, **caractérisé en ce que** la zone de réception (68a ; 68b ; 68c) s'étend jusque dans la zone de rabattement (46a ; 46b ; 46c) derrière l'unité de table (18a ; 18b ; 18c) rabattue.

12. Siège d'avion comprenant un dispositif de siège d'avion (10a ; 10b ; 10c ; 10d) selon l'une quelconque des revendications 1 à 11.
